# EUROPEAN PATENT APPLICATION

(11) **EP 4 224 168 A1**
(43) Date of publication of application: **09.08.2023**
(21) Application number: 21875676.5
(22) Date of filing: 29.09.2021
(51) Int. Cl.: G01N 35/02, G01N 1/28, G01N 1/36

(54) **DEVICE FOR FABRICATING PARAFFIN-EMBEDDED BLOCK**

(30) Priority: 30.09.2020 JP 2020164974
(71) Applicant: Jokoh Co., Ltd, Tokyo 113-0033 (JP)
(72) Inventor: CHIBA, Hironori, Kawasaki-shi Kanagawa 213-8588 (JP); TOKUDA, Yasuyo, Kawasaki-shi Kanagawa 213-8588 (JP); NIKAWA, Takafumi, Kawasaki-shi Kanagawa 213-8588 (JP); MORO, Hiroshi, Kawasaki-shi Kanagawa 213-8588 (JP)
(74) Representative: Hasegawa, Kan
(86) International application number: PCT/JP2021/035806
(87) International publication number: WO 2022/071376

(57) **Abstract**

A plurality of specimens can be processed simultaneously. Included are a holding portion (30) including a first holding portion (30a) and a second holding portion (30b) that respectively hold a first cassette holder (2) and a second cassette holder (2), a chemical liquid bottle holding portion (40) including a first chemical liquid bottle holding portion (40a) and a second chemical liquid bottle holding portion (40b), and a paraffin-filled bottle holding portion (50) including a first paraffin-filled bottle holding portion (50a) and a second paraffin-filled bottle holding portion (50b). The first cassette holder (2) is inserted into the chemical liquid bottle provided to the first chemical liquid bottle holding portion (40a) and the paraffin-filled bottle provided to the first paraffin-filled bottle holding portion (50a). Furthermore, the second cassette holder (2) is inserted into the chemical liquid bottle provided to the second chemical liquid bottle holding portion (40b) and the paraffin-filled bottle provided to the second paraffin-filled bottle holding portion (50b).

## Description

### Technical Field

The present invention relates to a paraffin-embedded block preparation device.

### Background Art

Patent Literature 1 discloses a transporter system for carrying tissue samples that includes a transport container, a fixative in the transport container, and a cooling device for reducing and/or maintaining the temperature of the fixative to carry out a pre-soaking process.

### Citation List

### Patent Literature

Patent Literature 1: JP 2018-511782 T

### Summary of Invention

### Technical Problem

However, in the invention described in Patent Literature 1, only one tissue sample (specimen) is processed, and a plurality of specimens cannot be processed simultaneously.

The present invention is made in view of such a circumstance, and an object of the present invention is to provide a paraffin-embedded block preparation device that can process a plurality of specimens simultaneously.

### Solution to Problem

For example, a paraffin-embedded block preparation device according to the present invention to achieve the object described above includes: a holding portion configured to hold a cassette holder including a cassette and a specimen vertically; a chemical liquid bottle holding portion provided with a plurality of chemical liquid bottles filled with a chemical liquid; a paraffin-filled bottle holding portion provided with a paraffin-filled bottle filled with liquid paraffin; a head including a cassette holder gripping unit configured to grip the cassette holder; a first conveying unit configured to move the head in a horizontal direction or a vertical direction; and a control unit configured to control the head and the first conveying unit, wherein the holding portion includes a first holding portion and a second holding portion, the first holding portion and the second holding portion respectively hold a first cassette holder and a second cassette holder, each of which is the cassette holder, the chemical liquid bottle holding portion includes a first chemical liquid bottle holding portion and a second chemical liquid bottle holding portion, the paraffin-filled bottle holding portion includes a first paraffin-filled bottle holding portion and a second paraffin-filled bottle holding portion, the control unit causes the cassette holder gripping unit to grip the first cassette holder and inserts the first cassette holder into the chemical liquid bottle provided to the first chemical liquid bottle holding portion and the paraffin-filled bottle provided to the first paraffin-filled bottle holding portion, and causes the cassette holder gripping unit to grip the second cassette holder and inserts the second cassette holder into the chemical liquid bottle provided to the second chemical liquid bottle holding portion and the paraffin-filled bottle provided to the second paraffin-filled bottle holding portion.

The paraffin-embedded block preparation device according to the present invention includes the holding portion including the first holding portion and the second holding portion that respectively hold the first cassette holder and the second cassette holder, the chemical liquid bottle holding portion including the first chemical liquid bottle holding portion and the second chemical liquid bottle holding portion, and the paraffin-filled bottle holding portion including the first paraffin-filled bottle holding portion and the second paraffin-filled bottle holding portion. The first cassette holder is inserted into the chemical liquid bottle provided to the first chemical liquid bottle holding portion and the paraffin-filled bottle provided to the first paraffin-filled bottle holding portion. Furthermore, the second cassette holder is inserted into the chemical liquid bottle provided to the second chemical liquid bottle holding portion and the paraffin-filled bottle provided to the second paraffin-filled bottle holding portion. Thus, a plurality of specimens can be processed simultaneously. Furthermore, since different chemical liquid bottles and paraffin-filled bottles are used for respective cassette holders, an embedded block that can prevent contamination and is suitable for genetic diagnosis can be prepared.

The chemical liquid bottle may include a first chemical liquid bottle filled with formalin and a second chemical liquid bottle filled with ethanol, the first chemical liquid bottle holding portion and the second chemical liquid bottle holding portion may be respectively provided with the first chemical liquid bottle and the second chemical liquid bottle, and the control unit may insert the first cassette holder into the first chemical liquid bottle provided to the first chemical liquid bottle holding portion, determine whether a predetermined period of time has elapsed after insertion of the first cassette holder into the first chemical liquid bottle, and when the predetermined period of time has elapsed, take out the first cassette holder from the first chemical liquid bottle and insert the first cassette holder into the second chemical liquid bottle provided to the first chemical liquid bottle holding portion, and insert the second cassette holder into the first chemical liquid bottle provided to the second chemical liquid bottle holding portion, determine whether a predetermined period of time has elapsed after insertion of the second cassette holder into the first chemical liquid bottle, and when the predetermined period of time has elapsed, take out the second cassette holder from the first chemical liquid bottle and insert the second cassette holder into the second chemical liquid bottle provided to the second chemical liquid bottle holding portion. Thus, immersion of the specimen in a fixative (formalin) can be performed automatically. Furthermore, by managing the immersion time in formalin for fragmenting DNA, a large amount of DNA can be extracted from an embedded block, which can contribute to improvement in test accuracy.

The chemical liquid bottle may include a third chemical liquid bottle filled with xylene, the first chemical liquid bottle holding portion and the second chemical liquid bottle holding portion may be each provided with the third chemical liquid bottle, and the control unit may insert the first cassette holder into the second chemical liquid bottle provided to the first chemical liquid bottle holding portion, determine whether a predetermined period of time has elapsed after insertion of the first cassette holder into the second chemical liquid bottle, and when the predetermined period of time has elapsed, take out the first cassette holder from the second chemical liquid bottle and insert the first cassette holder into the third chemical liquid bottle provided to the first chemical liquid bottle holding portion, and insert the second cassette holder into the second chemical liquid bottle provided to the second chemical liquid bottle holding portion, determine whether a predetermined period of time has elapsed after insertion of the second cassette holder into the second chemical liquid bottle, and when the predetermined period of time has elapsed, take out the second cassette holder from the second chemical liquid bottle and insert the second cassette holder into the third chemical liquid bottle provided to the second chemical liquid bottle holding portion. Thus, immersion of the specimen in the chemical liquid can be performed automatically.

The control unit may insert the first cassette holder into the first chemical liquid bottle provided to the first chemical liquid bottle holding portion, determine whether the predetermined period of time has elapsed after insertion of the first cassette holder into the first chemical liquid bottle, and insert the second cassette holder into the first chemical liquid bottle provided to the second chemical liquid bottle holding portion until the predetermined period of time has elapsed. Thus, the immersion processing in the chemical liquid can be simultaneously executed on two cassette holders.

A placement portion on which the cassette holder is placed horizontally; a paraffin discharge unit including a nozzle configured to discharge paraffin; a cooling unit including a cooling mechanism and a flat surface portion on which the cassette holder is placed horizontally; and a second conveying unit configured to move the placement portion in the horizontal direction may be included, wherein the head may change a position and orientation of the cassette holder gripping unit from a state in which the cassette holder gripping unit holds the cassette holder vertically to a state in which the cassette holder gripping unit holds the cassette holder horizontally, and the control unit may change the position and orientation of the cassette holder gripping unit to horizontally place the cassette holder held vertically, control the head and the first conveying unit to place the cassette holder on the placement portion, and control the paraffin discharge unit and the second conveying unit to move the placement portion in the horizontal direction and dispose the placement portion below the nozzle to discharge paraffin from the nozzle in a state in which the cassette holder is disposed below the nozzle, and move the placement portion from below the nozzle in the horizontal direction to place the cassette holder on the flat surface portion. Thus, the discharge of paraffin and the cooling of the cassette holders can be performed automatically, and the embedded block can be prepared automatically.

A vibration table that is capable of translational motion at least in the horizontal direction and is provided below the nozzle in the vertical direction may be included, wherein the control unit may control the second conveying unit, the paraffin discharge unit, and the vibration table to place the cassette holder placed on the placement portion on the vibration table and vibrate the vibration table while discharging paraffin from the nozzle. Thus, the paraffin can fill the entirety of the inside of the cassette holder.

The chemical liquid bottle may include a bottle body a cross-sectional shape of which along a plane orthogonal to a center axis is polygonal, and a lid covering an opening portion of the bottle body, the head may include a lid gripping unit configured to grip the lid and rotatably provided, the chemical liquid bottle holding portion may include a plate-shaped portion in which a plurality of holes having a shape corresponding to an outer shape of the chemical liquid bottle are formed, the plate-shaped portion may extend along the horizontal direction, the bottle body may be inserted into the holes, the bottle body and the lid may be screwed together, and the control unit may control the lid gripping unit to rotate the lid gripping unit in a state in which the lid gripping unit grips the lid to remove the lid from the bottle body. Thus, the bottle body does not rotate even when the lid is rotated by the lid gripping unit, and the lid can be removed from the bottle body without gripping the bottle body.

A lid placement portion on which the lid is placed; and a tentative lid placement portion on which a tentative lid is placed may be included, wherein the control unit may place the lid removed from the bottle body on the lid placement portion and cover the bottle body from which the lid is removed with the tentative lid placed on the tentative lid gripping unit. Thus, it is possible to prevent evaporation of and emission of odor from the chemical liquid.

The control unit may cause the cassette holder gripping unit to grip the cassette holder and move the cassette holder up and down inside the chemical liquid bottle. Thus, the chemical liquid filled in the chemical liquid bottle can be stirred.

### Advantageous Effects of Invention

According to the present invention, a plurality of specimens can be processed simultaneously.

### Brief Description of Drawings

FIG. 1 is a perspective view illustrating a schematic configuration of a paraffin-embedded block preparation device 1 of an embodiment of the present invention.
FIG. 2 is a perspective view illustrating a schematic configuration of the paraffin-embedded block preparation device 1.
FIG. 3 is a perspective view illustrating an example of a schematic configuration of a holding portion 30.
FIG. 4 is a diagram illustrating an example of a schematic configuration of a cassette holder 2, with (A) being a front view and (B) being a side view.
FIG. 5 is a diagram illustrating a how a cassette 101 is set to the cassette holder 2.
FIG. 6 is a perspective view illustrating an example of a schematic configuration of a chemical liquid bottle holding portion 40 and a temporary placement portion 45.
FIG. 7 is a diagram illustrating an example of a schematic configuration of a bottle body 71 in which the cassette holder 2 is provided, with (A) being a front view of the cassette holder 2 and (B) being a side view of the cassette holder 2.
FIG. 8 is a plan view illustrating a schematic configuration of the paraffin-embedded block preparation device 1.
FIG. 9 is a perspective view illustrating an example of a schematic configuration of a paraffin fixing unit 60.
FIG. 10 is a perspective view illustrating an example of a schematic configuration of the cassette holder 2 and a paraffin receiver 102, with (A) being a perspective view of the paraffin receiver 102, (B) being a perspective view illustrating a state where the cassette holder 2 is placed on the paraffin receiver 102, and (C) being a cross-sectional view illustrating the state where the cassette holder 2 is placed on the paraffin receiver 102.
FIG. 11 is a cross-sectional view illustrating an example of a schematic configuration of a paraffin discharge unit 62.
FIG. 12 is a block diagram illustrating an electrical configuration of the paraffin-embedded block preparation device 1.
FIG. 13 is a flowchart illustrating a flow of processing executed by the paraffin-embedded block preparation device 1.
FIG. 14 is a flowchart illustrating a flow of processing (step S20) of immersing the cassette holder 2 in chemical liquid.
FIG. 15 is a flowchart illustrating a flow of processing (step S30) of immersing the cassette holder 2 in paraffin liquid.
FIG. 16 is a diagram illustrating the cassette holder 2 after processing executed by the paraffin-embedded block preparation device 1.
FIG. 17 is a diagram illustrating how an embedded block is taken out from the cassette holder 2.
FIG. 18 is a view illustrating the cassette 101 and an embedded block B taken out from the cassette holder 2, with (A) being a side view and (B) being a perspective view.
FIG. 19 is a perspective view illustrating an overview of a cassette holder 3.
FIG. 20 is a diagram illustrating an example of a schematic configuration of the cassette holder 3, with (A) being a plan view and (B) being a cross-sectional view.
FIG. 21 is a perspective view illustrating an overview of a cassette holder 3A.

### Description of Embodiments

Hereinafter, embodiments of the present invention will be described in detail with reference to the drawings. The paraffin-embedded block preparation device of the present invention is, for example, a device for preparing a paraffin-fixed embedded block used for a genetic test such as an oncogene panel test. The cassette holder of the present invention is a member for holding a cassette for medical use, and is used for preparing a paraffin-fixed embedded block.

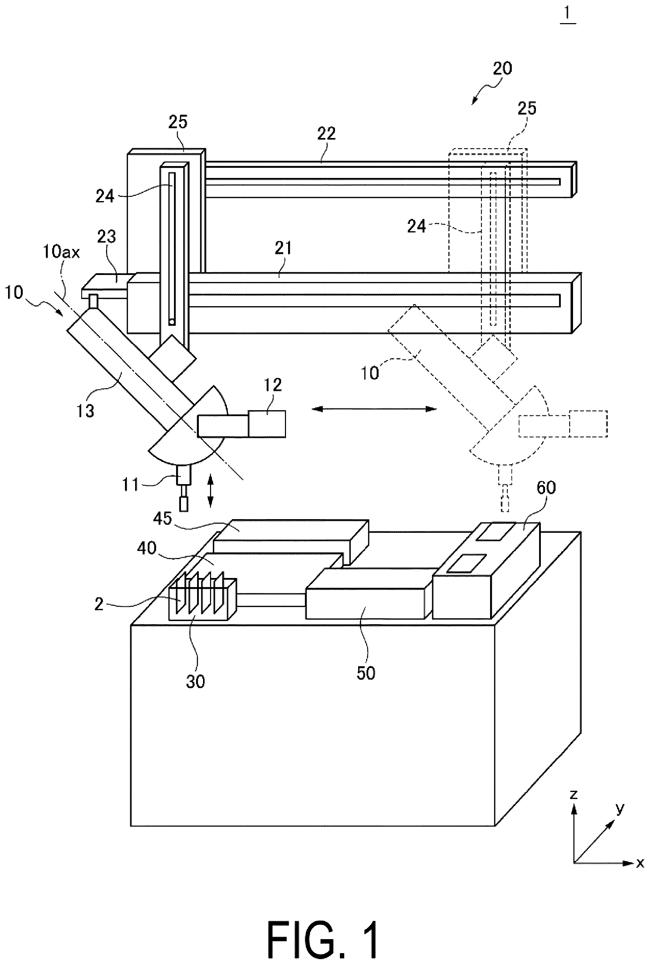

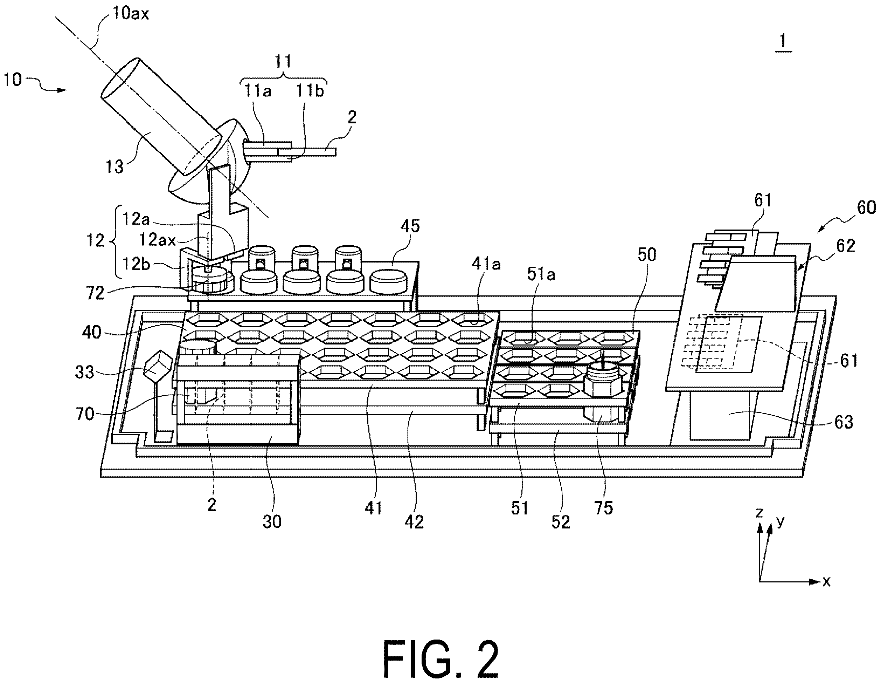

FIGS. 1 and 2 are perspective views illustrating an example of a schematic configuration of a paraffin-embedded block preparation device 1 of an embodiment of the present invention. FIG. 2 is an enlarged view of a main part of the paraffin-embedded block preparation device 1. In the following description, an x direction and a y direction are defined as the horizontal direction, and a z direction is defined as the vertical direction. The x direction and the y direction are orthogonal to each other.

The paraffin-embedded block preparation device 1 mainly includes a head 10, a conveying unit 20 (corresponding to a first conveying unit), a holding portion 30, a chemical liquid bottle holding portion 40, a paraffin-filled bottle holding portion 50, and a paraffin fixing unit 60.

The head 10 is provided to the conveying unit 20 and is disposed above the holding portion 30, the chemical liquid bottle holding portion 40, and the paraffin-filled bottle holding portion 50. The head 10 mainly includes a cassette holder gripping unit 11 that grips a cassette holder 2 (described in detail below), a lid gripping unit 12 that grips a lid 72 (described in detail below), and a body portion 13 provided with the cassette holder gripping unit 11 and the lid gripping unit 12.

The cassette holder gripping unit 11 has two claws 11a and 11b (see FIG. 2) provided to be movable in parallel, and grips the cassette holder 2 using the claws 11a and 11b. The lid gripping unit 12 has two claws 12a and 12b (see FIG. 2) provided to be movable in parallel, and grips the lid 72 using the claws 12a and 12b.

The cassette holder gripping unit 11 includes an opening/closing unit (not illustrated) that opens and closes the claws 11a and 11b between a closed position at which the cassette holder 2 is gripped and an open position at which the cassette holder 2 is not gripped. The lid gripping unit 12 is provided with an opening/closing unit (not illustrated) that opens and closes the claws 12a and 12b between a closed position at which the lid 72 is gripped and an open position at which the lid 72 is not gripped. The opening/closing unit includes an actuator and a transmission mechanism that transmits power from the actuator.

The lid gripping unit 12 is provided so as to be rotatable about an axis 12ax. The lid gripping unit 12 includes an actuator that rotates the lid gripping unit 12 and a transmission mechanism that transmits power from the actuator.

The body portion 13 is provided so as to be rotatable about an axis 10ax. The body portion 13 includes an actuator that rotates the body portion 13 and a transmission mechanism that transmits power from the actuator.

The head 10 can adjust the orientations of the cassette holder gripping unit 11 and the lid gripping unit 12 by rotating the body portion 13 about the axis 10ax. The axis 10ax is inclined at approximately 45 degrees with respect to the z direction. The longitudinal directions of the cassette holder gripping unit 11 and the lid gripping unit 12 are inclined at approximately 45 degrees with respect to the axis 10ax of the head 10. Therefore, when the head 10 is rotated about the axis 10ax, the positions and orientations of the cassette holder gripping unit 11 and the lid gripping unit 12 are changed between: a state where the longitudinal direction of the cassette holder gripping unit 11 is along the z direction (the cassette holder gripping unit 11 holds the cassette holder 2 vertically) and the longitudinal direction of the lid gripping unit 12 is along the x direction; and a state where the longitudinal direction of the cassette holder gripping unit 11 is along the x direction (the cassette holder gripping unit 11 holds the cassette holder 2 horizontally) and the longitudinal direction of the lid gripping unit 12 is along the z direction.

The conveying unit 20 makes the head 10 move in the horizontal direction or the vertical direction. The conveying unit 20 mainly includes rails 21 and 22 extending in the x direction, a rail 23 extending in the y direction, a rail 24 extending in the z direction, and a driving unit 25 including an actuator (not illustrated).

The rail 21 is provided with the rail 24 and the rail 22 is provided with the driving unit 25. The driving unit 25 is provided with the rail 23. The driving unit 25 makes the head 10 and the rails 23 and 24 move in the x direction along the rail 21, and makes the head 10 move in the y direction along the rail 23.

The head 10 is provided to the rail 24. The driving unit 25 moves the head 10 and the rails 23 and 24 in the z direction.

Thus, the conveying unit 20 can convey the head 10, that is, the cassette holder 2 gripped by the cassette holder gripping unit 11 among the holding portion 30, the chemical liquid bottle holding portion 40, the paraffin-filled bottle holding portion 50, and the paraffin fixing unit 60.

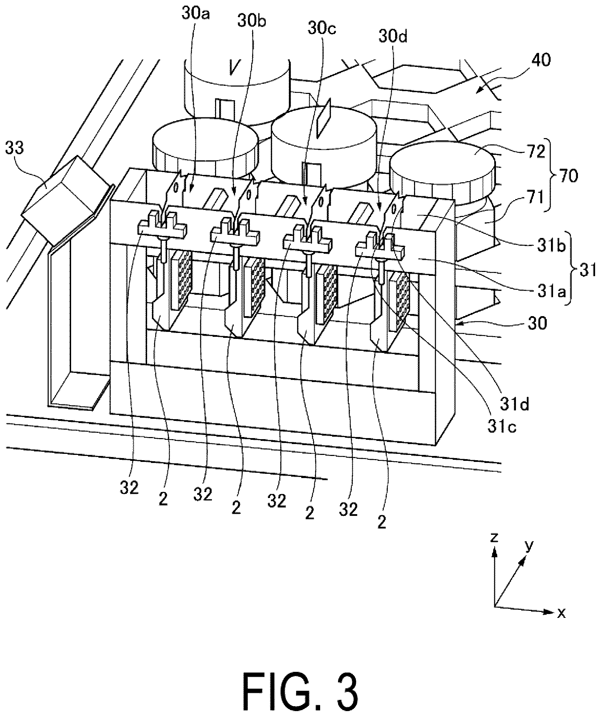

The holding portion 30 holds the cassette holder vertically. FIG. 3 is a perspective view illustrating an example of a schematic configuration of the holding portion 30.

The holding portion 30 mainly includes a frame 31 and a sensor 32. The frame 31 includes two plate-shaped portions 31a and 31b disposed in parallel while extending substantially along the x direction. The plate-shaped portions 31a and 31b are respectively provided with four slits 31c and four slits 31d. The slits 31c and 31d extend along the z direction, and the positions of the slits 31c and the slits 31d in the x direction substantially match.

With the slits 31c and 31d, the holding portion 30 is provided with holding portions 30a, 30b, 30c, and 30d adjacent to each other. The cassette holder 2 is inserted into the slits 31c and 31d. As a result, the cassette holder 2 is held vertically in the holding portions 30a, 30b, 30c, and 30d. When the cassette holder 2 is vertically oriented, the longitudinal direction of the cassette holder 2 is along the vertical direction.

In the mode illustrated in FIG. 3, the holding portions 30a, 30b, 30c, and 30d are provided adjacent to each other, but the holding portions 30a, 30b, 30c, and 30d may not be adjacent to each other.

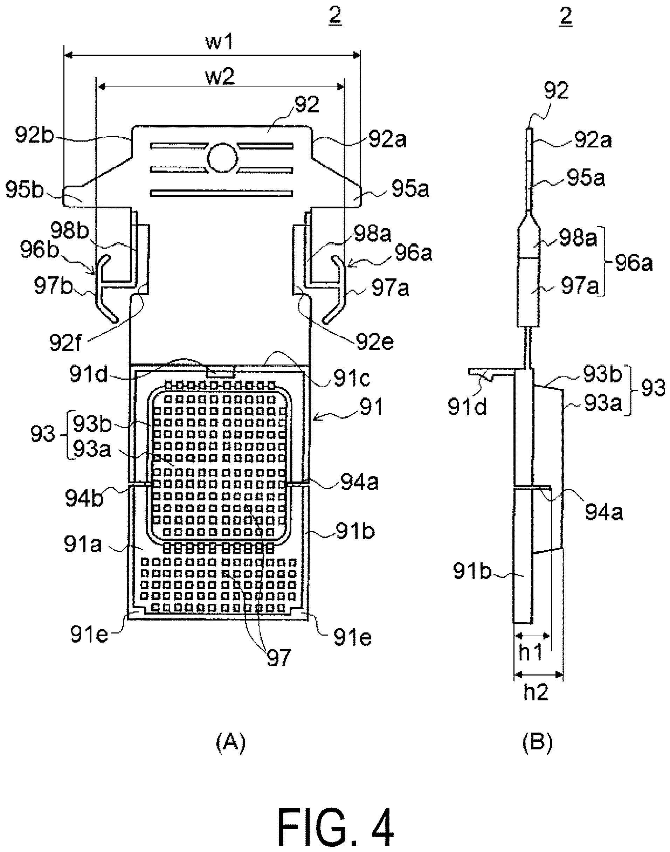

The cassette holder 2 will now be described. FIG. 4 is a diagram illustrating an example of a schematic configuration of the cassette holder 2, with (A) being a plan view and (B) being a side view.

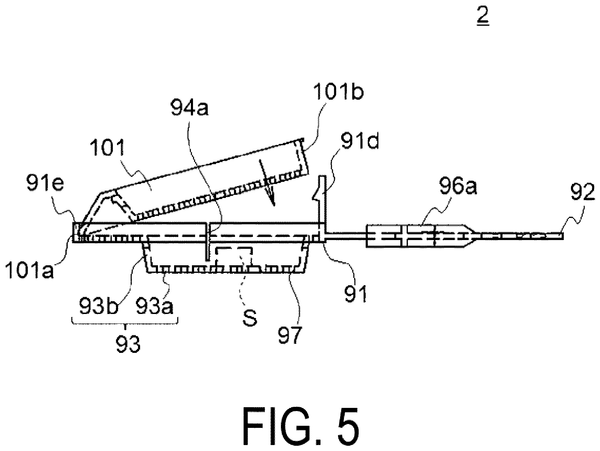

The cassette holder 2 mainly includes a cassette receiving portion 91 to which a cassette 101 (see FIG. 5) is set, a plate-shaped portion 92 having a substantially plate-like shape, and a protrusion 93 provided on the cassette receiving portion 91. The cassette receiving portion 91 and the protrusion 93 are provided with a pair of slits 94a and 94b.

In the description of the cassette holder 2, a direction substantially orthogonal to the extending direction of the plate-shaped portion 92 is defined as an upward-downward direction, a protruding direction of the protrusion 93 is defined as a downward direction, and a direction opposite to the protruding direction of the protrusion 93 is defined as an upward direction. The plan view in FIG. 4(A) illustrates the cassette holder 2 as viewed from above.

The cassette receiving portion 91 has a rectangular shape in plan view (when the cassette holder 2 is viewed from above), and mainly includes a bottom surface 91a and a rib 91b. The bottom surface 91a is a flat surface with which the lower surface of the cassette 101 comes into contact when the cassette 101 is set, and has a rectangular shape in plan view. The bottom surface 91a is provided with a plurality of through holes 97.

The rib 91b protrudes upward from the bottom surface 91a. The rib 91b has a rectangular shape in plan view and comes into contact with the peripheral edge of the cassette 101 when the cassette 101 is set. However, the shape of the rib 91b is not limited to this. For example, the rib may have a rectangular U shape in plan view, or may be made up of two parallel bar-shaped portions.

The rib 91b is provided with a cassette pressing claw 91d for holding the cassette 101 when the cassette 101 is set to the cassette receiving portion 91. However, the cassette pressing claw 91d is not essential.

The bottom surface 91a is provided with the protrusion 93 protruding downward. The inside of the protrusion 93 is hollow. In the present embodiment, the protrusion 93 has a substantially truncated pyramid shape, but the shape of the protrusion 93 is not limited to this.

The protrusion 93 is provided with the plurality of through holes 97. In the present embodiment, the through holes 97 are provided in a bottom surface 93a of the protrusion 93 and is not provided in a side surface 93b, but may be provided in the side surface 93b.

FIG. 5 is a diagram illustrating a state how the cassette 101 is set to the cassette holder 2. In a state where a specimen (hereinafter, referred to as sample S) is placed on the bottom surface 93a, the cassette 101 is attached to the cassette receiving portion 91. When a rear end 101b of the cassette 101 is inserted into the rib 91b after a front end 101a of the cassette 101 has been brought into contact with a projection 91e of the rib 91b, the cassette pressing claw 91d is caught by the rear end 101b. As a result, the cassette 101 is attached to the cassette holder 2, and the sample S is sealed in the cassette holder 2.

The description will now return to FIG. 4. The bottom surface 91a, the rib 91b, and the side surface 93b are provided with the slits 94a and 94b. The slits 94a and 94b are substantially parallel to the short sides of the rib 91b, and are collinearly arranged in plan view of the cassette holder 2. A height h1 of the slits 94a and 94b in side view is equal to or greater than half of a distance h2 between a distal end of the rib 91b and a distal end of the protrusion 93.

The plate-shaped portion 92 is provided on one side 91c of the two short sides of the rib 91b. The plate-shaped portion 92 extends substantially parallel to the bottom surface 91a. The plate-shaped portion 92 has a substantially rectangular shape in plan view of the cassette holder 2, and has two sides 92a and 92b along a direction (first direction) substantially parallel to the long side of the rib 91b. The sides 92a and 92b have substantially the same length as the long side of the rib 91b in plan view. As a result, the direction along the sides 92a and 92b is the longitudinal direction of the cassette holder 2.

The sides 92a and 92b are provided with projections 95a and 95b, respectively. The projections 95a and 95b are a pair of projections protruding outward in plan view.

The sides 92a and 92b are provided with projections 96a and 96b, respectively. The projections 96a and 96b are a pair of projections protruding outward in plan view. The heights of the projections 96a and 96b are lower than the heights of the projections 95a and 95b. In other words, a width w2 between both ends of the projections 96a and 96b is smaller than a width w1 between both ends of the projections 95a and 95b. The projections 96a and 96b are provided between the cassette receiving portion 91 and the projections 95a and 95b.

The distal end of each of the projections 96a and 96b is configured to be movable in a direction (second direction) substantially parallel to the short side (side 91c) of the rib 91b. The projections 96a and 96b respectively include flat surface portions 97a and 97b substantially parallel to the sides 92a and 92b, and L-shaped arm portions 98a and 98b connecting the flat surface portions 97a and 97b and the sides 92a and 92b. The flat surface portions 97a and 97b are substantially orthogonal to a plane including the plate-shaped portion 92.

The sides 92a and 92b respectively include recesses 92e and 92f. The flat surface portions 97a and 97b move in a direction substantially parallel to the side 91c, with base end portions of the arm portions 98a and 98b deforming inside the recesses 92e and 92f.

However, the configuration enabling the movement of the distal ends of the projections 96a and 96b in the direction substantially parallel to the side 91c is not limited to this.

The description will now return to FIG. 3. The sensor 32 is a sensor that detects whether the cassette holder 2 is held in the holding portions 30a, 30b, 30c, and 30d, and is provided for each of the holding portions 30a, 30b, 30c, and 30d. The sensor 32 is, for example, a transmission-type optical sensor, and has a light emitting unit and a light receiving unit facing each other across the slit 31c. The sensor 32 detects the presence or absence of the cassette holder 2, based on a fact that light emitted from the light emitting unit is blocked by the cassette holder 2 (projection 95a) inserted in the slit 31c so as to be not received by the light receiving unit.

A sensor 33 is provided adjacent to the frame 31. The sensor 33 is, for example, a reflective optical sensor, and detects the position of the cassette holder gripping unit 11.

The description will now return to FIGS. 1 and 2. In the chemical liquid bottle holding portion 40, a plurality of chemical liquid bottles 70 filled with chemical liquid containing formalin, ethanol, and xylene are provided adjacent to each other. When the cassette holder 2 is inserted into the chemical liquid bottles 70, the sample S inside the cassette holder 2 is immersed in the chemical liquid. A temporary placement portion 45 for temporarily placing a lid is provided adjacent to the chemical liquid bottle holding portion 40.

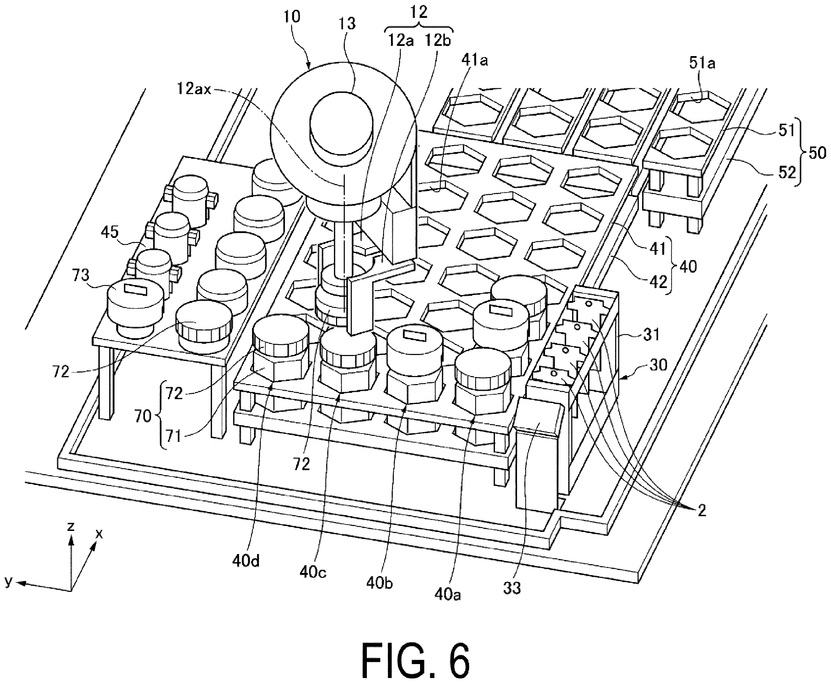

FIG. 6 is a perspective view illustrating an example of a schematic configuration of the chemical liquid bottle holding portion 40 and the temporary placement portion 45.

The chemical liquid bottle holding portion 40 mainly includes plate-shaped portions 41 and 42 extending along the horizontal direction. The plate-shaped portion 41 is provided with a plurality of holes 41a. The chemical liquid bottles 70 are provided in the holes 41a.

The chemical liquid bottle 70 includes a bottle body 71 a cross-sectional shape of which along a plane orthogonal to the center axis is polygonal, and the lid 72 that covers an opening portion of the bottle body 71. The bottle body 71 and the lid 72 are screwed together.

The shape of the hole 41a corresponds to the outer shape of the bottle body 71, and the bottle body 71 is inserted into the hole 41a. The holes 41a are arranged two-dimensionally along the x direction and the y direction. Therefore, the chemical liquid bottles 70 are two-dimensionally arranged in the chemical liquid bottle holding portion 40. When the bottle body 71 is inserted into the hole 41a, the bottom surface of the bottle body 71 is placed on the plate-shaped portion 42.

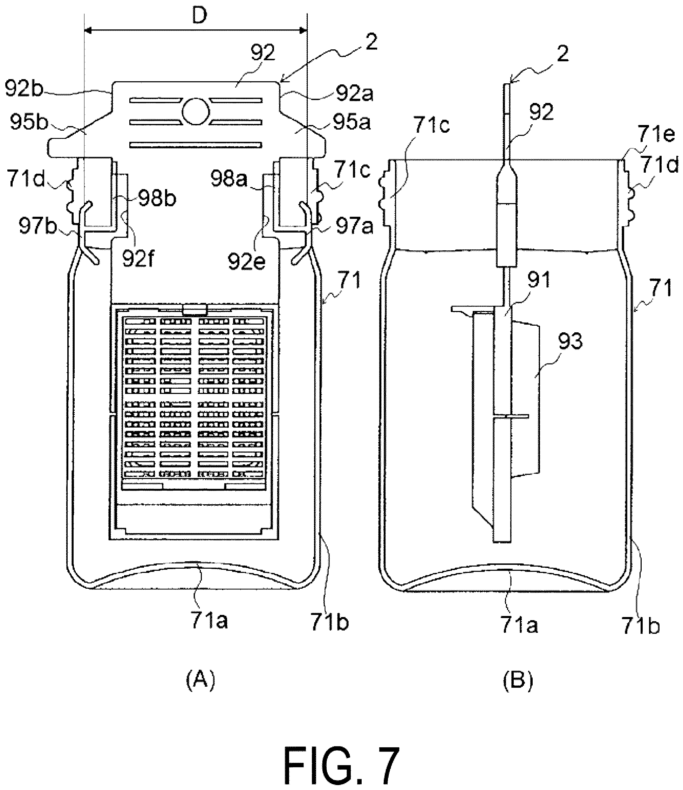

The cassette holder 2 is inserted into the chemical liquid bottle 70. FIG. 7 is a diagram illustrating an example of a schematic configuration of the bottle body 71 in which the cassette holder 2 is provided, with (A) being a front view of the cassette holder 2 and (B) being a side view of the cassette holder 2. FIG. 7 is a cross-sectional view of the bottle body 71, with hatching indicating a cross section omitted.

The bottle body 71 mainly includes a bottom surface 71a, a side surface 71b that forms a hexagonal cylindrical shape and is provided on the upper side of the bottom surface 71a, and a tubular portion 71c that has a cylindrical shape and is provided on the upper side of the side surface 71b. The tubular portion 71c has an outer circumference surface provided with a thread 71d screwed with a thread formed on the lid 72. The tubular portion 71c has an opening portion 71e as an upper end surface.

The cassette holder 2 is inserted into the bottle body 71 through the opening portion 71e. During this process, the cassette holder 2 is vertically orientated with the plate-shaped portion 92 extending along the vertical direction. Since the width w1 (see FIG. 4) between both ends of the projections 95a and 95b is larger than a diameter D of the tubular portion 71c, the projections 95a, 95b are caught on the opening portion 71e, whereby the cassette holder 2 is positioned in the z direction.

The width w2 (see FIG. 4) between both ends of the projections 96a and 96b is smaller than the width w1 (see FIG. 4) between both ends of the projections 95a and 95b. Thus, the distal ends (the flat surface portions 97a and 97b) of the projections 96a and 96b are configured to be movable in a width direction of the cassette holder 2. Therefore, when the cassette holder 2 is inserted into the bottle body 71, the flat surface portions 97a and 97b come into contact with an inner circumference surface of the tubular portion 71c, and the flat surface portions 97a and 97b press the inner circumference surface of the tubular portion 71c. As a result, the cassette holder 2 is fixed to the bottle body 71 with the cassette holder 2 inserted in the bottle body 71 prevented from rotating.

The description will now return to FIG. 6. The chemical liquid bottle holding portion 40 includes chemical liquid bottle holding portions 40a, 40b, 40c, and 40d adjacently arranged. The chemical liquid bottle holding portions 40a to 40d are provided adjacent to each other in the y direction herein, but may not be adjacent to each other.

The chemical liquid bottle holding portions 40a to 40d respectively correspond to the holding portions 30a to 30d. The cassette holder 2 held in the holding portion 30a is immersed in the chemical liquid bottle 70 provided in the chemical liquid bottle holding portion 40a. The cassette holder 2 held in the holding portion 30b is immersed in the chemical liquid bottle 70 provided in the chemical liquid bottle holding portion 40b. The cassette holder 2 held in the holding portion 30c is immersed in the chemical liquid bottle 70 provided in the chemical liquid bottle holding portion 40c. The cassette holder 2 held in the holding portion 30d is immersed in the chemical liquid bottle 70 provided in the chemical liquid bottle holding portion 40d.

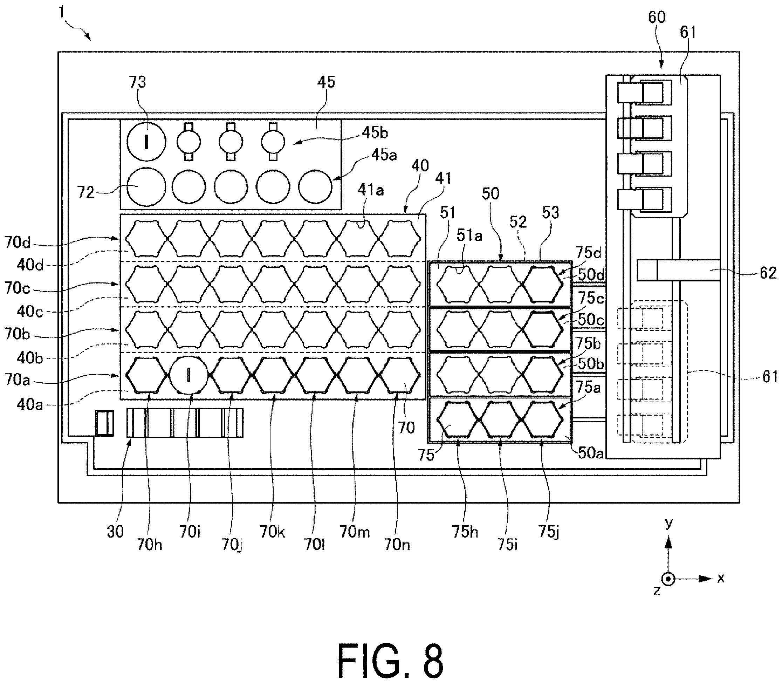

FIG. 8 is a plan view illustrating a schematic configuration of the paraffin-embedded block preparation device 1. In FIG. 8, the head 10 and the conveying unit 20 are omitted.

The chemical liquid bottle holding portions 40a to 40d are regions elongated in the x direction, and are respectively provided with chemical liquid bottle groups 70a to 70d. The chemical liquid bottle groups 70a to 70d include a plurality of chemical liquid bottles 70 provided along the x direction.

The cassette holder 2 held in the holding portion 30a is inserted into the chemical liquid bottle group 70a. The cassette holder 2 held in the holding portion 30b is inserted into the chemical liquid bottle group 70b. The cassette holder 2 held in the holding portion 30c is inserted into the chemical liquid bottle group 70c. The cassette holder 2 held in the holding portion 30d is inserted into the chemical liquid bottle group 70d.

Each of the chemical liquid bottle groups 70a to 70d includes seven chemical liquid bottles 70. The chemical liquid bottle groups 70a to 70d each include a chemical liquid bottle 70h (corresponding to a first chemical liquid bottle) filled with formalin, chemical liquid bottles 70i, 70j, and 70k (corresponding to a second chemical liquid bottle) filled with ethanol, and chemical liquid bottles 70l, 70m, and 70n (corresponding to a third chemical liquid bottle) filled with xylene, arranged in this order from -x side. The cassette holder 2 is inserted into the chemical liquid bottles 70h, 70i, 70j, 70k, 70l, 70m and 70n in this order.

Although some of the chemical liquid bottles 70 are not illustration in FIGS. 6 and 8, the chemical liquid bottles 70 are actually inserted into all the holes 41a in at least two of the chemical liquid bottle holding portions 40a to 40d.

The temporary placement portion 45 is provided on the farther side (+y side) of the chemical liquid bottle holding portion 40. The temporary placement portion 45 has a lid placement portion 45a on which the lid 72 removed from the bottle body 71 is placed, and a tentative lid placement portion 45b on which a tentative lid 73 is placed. The tentative lid 73 covers the bottle body 71 into which the cassette holder 2 has been inserted.

The description will now return to FIGS. 1 and 2. The paraffin-filled bottle holding portion 50 is provided adjacent to the chemical liquid bottle holding portion 40. However, the paraffin-filled bottle holding portion 50 and the chemical liquid bottle holding portion 40 may not be adjacent to each other. The paraffin-filled bottle holding portion 50 is provided with a paraffin-filled bottle 75 filled with paraffin in a liquid form (hereinafter, referred to paraffin liquid). The paraffin-filled bottle 75 is similar to the chemical liquid bottle 70 except that the liquid filled therein is paraffin, and includes the bottle body 71 and the lid 72.

As illustrated in FIG. 8, the paraffin-filled bottle holding portion 50 mainly includes plate-shaped portions 51 and 52 extending along the horizontal direction, and a heating portion 53. Each of the plate-shaped portions 51 is provided with a plurality of holes 51a. The shape of the hole 51a corresponds to the outer shape of the paraffin-filled bottle 75, and the paraffin-filled bottle 75 is inserted into the hole 51a. The holes 51a are arranged two-dimensionally along the x direction and the y direction. Therefore, the paraffin-filled bottles 75 are two-dimensionally arranged in the paraffin-filled bottle holding portion 50. When the paraffin-filled bottle 75 is inserted into the hole 51a, the bottom surface of the paraffin-filled bottle 75 is placed on the plate-shaped portion 52.

The heating portion 53 is provided so as to cover the plate-shaped portions 51 and 52. The heating portion 53 heats the liquid paraffin filling the paraffin-filled bottle 75 to about 60°C, to prevent solidification of the liquid paraffin.

Note that the form of the heating portion 53 is not limited to the illustrated form. For example, the heating portion 53 may be formed by attaching a heating wire to the plate-shaped portions 51 and 52.

The paraffin-filled bottle holding portion 50 includes paraffin-filled bottle holding portions 50a, 50b, 50c, and 50d adjacently arranged. The paraffin-filled bottle holding portions 50a to 50d are provided adjacent to each other in the y direction herein, but may not be adjacent to each other.

The paraffin-filled bottle holding portions 50a to 50d are regions elongated in the x direction, and are respectively provided with paraffin-filled bottle groups 75a to 75d. The paraffin-filled bottle groups 75a to 75d include the plurality of paraffin-filled bottles 75 provided along the x direction.

The paraffin-filled bottle holding portions 50a to 50d respectively correspond to the holding portions 30a to 30d and the chemical liquid bottle holding portions 40a to 40d. The cassette holder 2 held in the holding portion 30a is inserted in the paraffin-filled bottle 75 provided to the paraffin-filled bottle holding portion 50a. The cassette holder 2 held in the holding portion 30b is inserted in the paraffin-filled bottle 75 provided to the paraffin-filled bottle holding portion 50b. The cassette holder 2 held in the holding portion 30c is inserted in the paraffin-filled bottle 75 provided to the paraffin-filled bottle holding portion 50c. The cassette holder 2 held in the holding portion 30d is inserted in the paraffin-filled bottle 75 provided to the paraffin-filled bottle holding portion 50d.

The paraffin-filled bottle groups 75a to 75d each include three paraffin-filled bottles 75. The paraffin-filled bottle groups 75a to 75d each include paraffin-filled bottles 75h, 75i, and 75j in this order from the -x side. The cassette holder 2 is inserted in the paraffin-filled bottles 75h, 75i, and 75j in this order.

Although some of the paraffin-filled bottles 75 are not illustrated in FIGS. 6 and 8, the paraffin-filled bottles 75 are actually inserted into all the holes 51a in at least two of the paraffin-filled bottle holding portions 50a to 50d.

The description will now return to FIGS. 1 and 2. The paraffin fixing unit 60 is provided adjacent to the paraffin-filled bottle holding portion 50. However, the paraffin fixing unit 60 and the paraffin-filled bottle holding portion 50 may not be adjacent to each other.

The paraffin fixing unit 60 includes a placement portion 61 on which the cassette holder 2 is horizontally placed, a paraffin discharge unit 62 including a nozzle that discharges the paraffin, and a cooling unit 63 including a cooling mechanism. The placement portion 61 is provided to be movable in the horizontal direction (here, the y direction). The paraffin discharge unit 62 and the cooling unit 63 are provided adjacent to each other in the moving direction of the placement portion 61 which is the y direction herein.

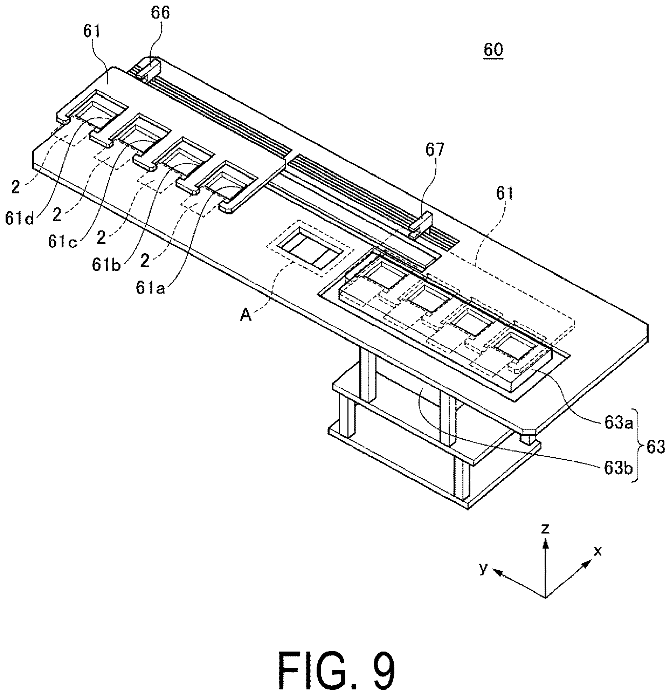

FIG. 9 is a perspective view illustrating an example of a schematic configuration of the paraffin fixing unit 60. In FIG. 9, the paraffin discharge unit 62 is omitted.

The placement portion 61 is a plate-shaped member extending along the horizontal direction. The cassette holder is placed horizontally on the placement portion 61. The cassette holder 2 horizontally disposed corresponds to a case where the extending direction of the plate-shaped portion 92 is the horizontal direction and the cassette holder 2 faces upward (the protrusion 93 protrudes vertically downward).

The cooling unit 63 mainly includes a flat surface portion 63a on which the cassette holder 2 is placed and a cooling mechanism 63b that cools the flat surface portion 63a. The cooling mechanism 63b includes a cooling unit such as a Peltier element. The flat surface portion 63a is preferably made of metal to be more efficiently cooled by the cooling mechanism 63b.

The placement portion 61 is provided with four holes 61a, 61b, 61c, and 61d. The cassette holders 2 and paraffin receivers 102 are horizontally placed in the holes 61a to 61d.

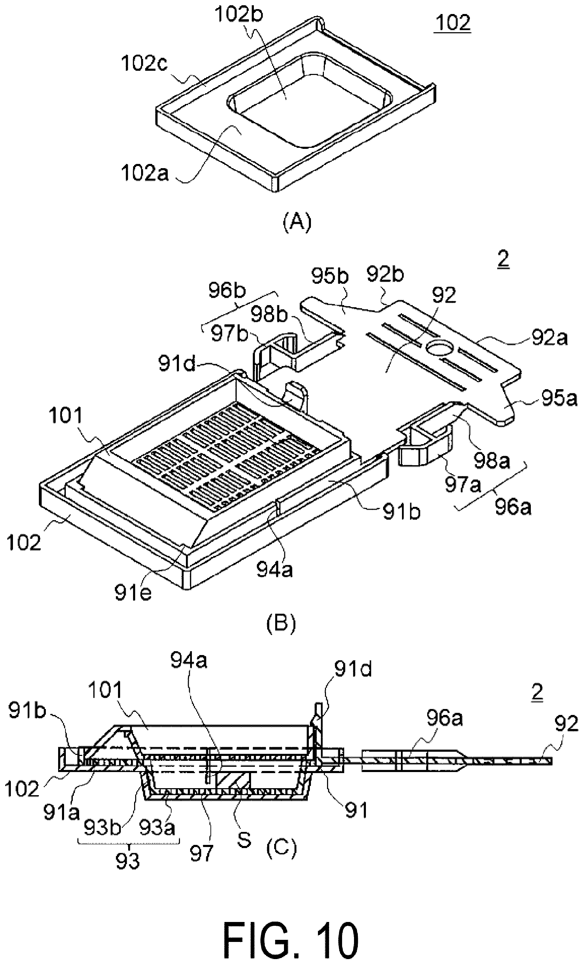

FIG. 10 is a perspective view illustrating an example of a schematic configuration of the cassette holder 2 and the paraffin receiver 102, with (A) being a perspective view of the paraffin receiver 102, (B) being a perspective view illustrating a state where the cassette holder 2 is placed on the paraffin receiver 102, and (C) being a cross-sectional view illustrating the state where the cassette holder 2 is placed on the paraffin receiver 102.

The paraffin receiver 102 mainly includes a plate-shaped portion 102a with which the cassette holder 2 comes into contact, a protrusion 102b formed in the plate-shaped portion 102a, and a rib 102c formed around the plate-shaped portion 102a. When the cassette holder 2 is placed on the paraffin receiver 102, the bottom surface 91a comes into contact with the plate-shaped portion 102a, and the protrusion 93 is inserted into the protrusion 102b.

The description will now return to FIG. 9. The paraffin receivers 102 are placed in the holes 61a to 61d in advance. The cassette holders 2 are placed on the paraffin receivers 102 placed in the holes 61a to 61d in advance.

The holes 61a to 61d respectively correspond to the holding portions 30a to 30d. The cassette holder 2 held in the holding portion 30a is placed on the paraffin receiver 102 placed in the hole 61a. The cassette holder 2 held in the holding portion 30b is placed on the paraffin receiver 102 placed in the hole 61b. The cassette holder 2 held in the holding portion 30c is placed on the paraffin receiver 102 placed in the hole 61c. The cassette holder 2 held in the holding portion 30d is placed on the paraffin receiver 102 placed in the hole 61d.

The paraffin fixing unit 60 includes conveying units 66 and 67 (corresponding to second conveying unit) that convey the placement portion 61 that is, the cassette holder 2 in the horizontal direction. The conveying unit 66 moves the placement portion 61 in the -y direction from a position indicated by solid line in FIG. 9, and disposes the cassette holders 2 provided in the holes 61a to 61d below (a region A indicated by dotted line in FIG. 9) a nozzle 62d (described in detail below) of the paraffin discharge unit 62. The conveying unit 67 moves the placement portion 61 in the -y direction, so that the cassette holders 2 provided in the holes 61a to 61d are moved onto the cooling unit 63 from the region A to be placed on the flat surface portion 63a.

In the present invention, the paraffin fixing unit 60 includes the two conveying units 66 and 67, but the paraffin fixing unit 60 may include one conveying unit having the functions of the conveying units 66 and 67.

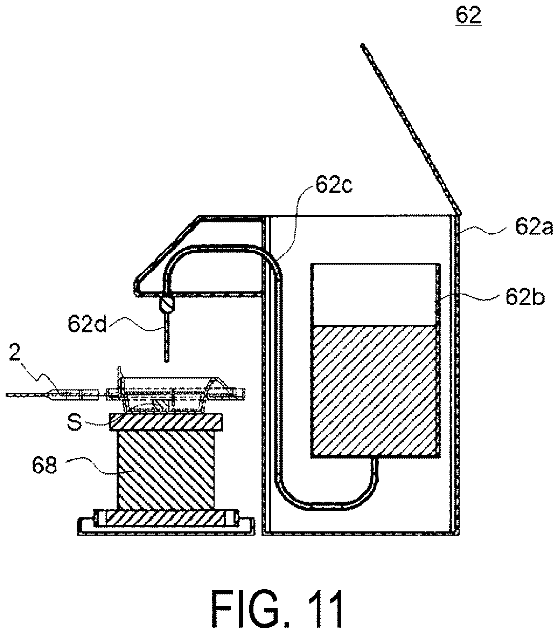

FIG. 11 is a cross-sectional view illustrating an example of a schematic configuration of the paraffin discharge unit 62. The paraffin discharge unit 62 mainly includes a housing 62a, a tank 62b, a pipe 62c, and the nozzle 62d. The tank 62b and the pipe 62c are provided inside the housing 62a, and the housing 62a is provided with the nozzle 62d.

The housing 62a includes a heating portion not illustrated. The heating portion heats the tank 62b, the pipe 62c and the nozzle 62d to about 60°C at which the paraffin turns into liquid.

The interior of the tank 62b is filled with the liquid paraffin. The paraffin is supplied from the tank 62b to the nozzle 62d through the pipe 62c, and discharged from the nozzle 62d.

A vibration table 68 is provided on the lower side of the nozzle 62d in the vertical direction (the region A indicated by the dotted line in FIG. 9). The vibration table 68 is capable of vibrating, for example, for translational motions in the three directions of x, y, and z and rotational motions about the respective axes. The vibration table 68 may be capable of vibrating in at least one direction, an is preferably capable of vibrating in a horizontal direction. Because the vibration table 68 is already known, a description thereof is omitted.

Further, the vibration table 68 includes a heating portion (not illustrated) and heats the cassette holder 2 placed on the vibration table 68. However, the heating portion is not essential in the vibration table 68.

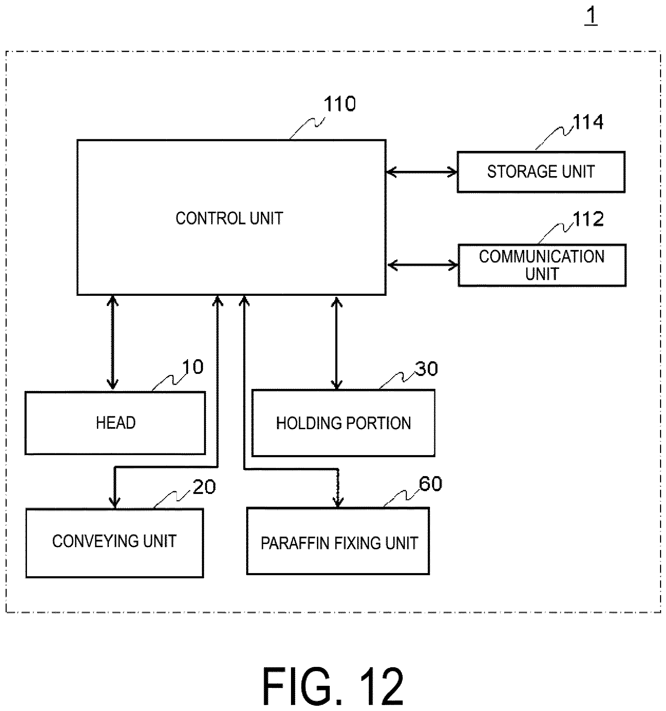

FIG. 12 is a block diagram illustrating an electrical configuration of the paraffin-embedded block preparation device 1. The paraffin-embedded block preparation device 1 mainly includes a control unit 110, a communication unit 112, and a storage unit 114. The control unit 110 mainly includes a Central Processing Unit (CPU), and operates in accordance with a program stored in the storage unit 114.

The head 10 (the cassette holder gripping unit 11, the lid gripping unit 12, and the body portion 13), the conveying unit 20 (the driving unit 25), the holding portion 30 (the sensors 32 and 33), the paraffin fixing unit 60 (the paraffin discharge unit 62, the cooling unit 63, the conveying unit 66 and 67, and the vibration table 68) are connected to the control unit 110, and the control unit 110 controls each of these. Specifically, the control unit 110 controls the cassette holder gripping unit 11 to open and close the claws 11a and 11b, controls the lid gripping unit 12 to open and close the claws 12a and 12b, and rotates the lid gripping unit 12. The control unit 110 controls the body portion 13 to rotate the head 10 about the axis 10ax. The control unit 110 controls the conveying unit 20 to move the head 10 in the horizontal direction and the vertical direction. The control unit 110 acquires signals from the sensors 32 and 33 and controls the head 10 and the conveying unit 20 based on the signals. The control unit 110 controls the conveying unit 66 and 67 to move the placement portion 61 in the horizontal direction. The control unit 110 controls the paraffin discharge unit 62 to discharge paraffin from the nozzle 62d. The control unit 110 controls the vibration table 68 to vibrate the vibration table 68 and to heat the vibration table 68 by the heating portion (not illustrated). Details of the operation of the control unit 110 will be described in detail below.

The communication unit 112 includes a communication interface or the like for communicating with an external device.

The storage unit 114 is formed by a hard disk or the like. The storage unit 114 stores various programs and various pieces of information required for the control unit 110 to execute the processing, and information on results of the processing.

The configuration of the paraffin-embedded block preparation device 1 illustrated in FIG. 12 is described as a main configuration for describing the features of the present embodiment, and does not exclude, for example, a configuration of a general information processing apparatus.

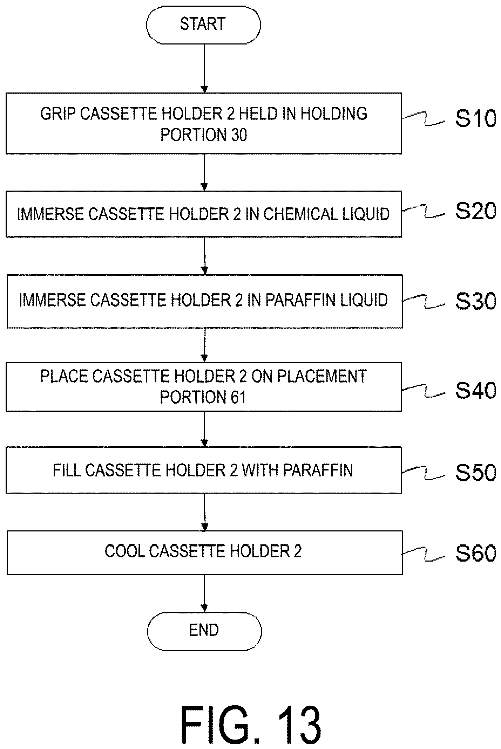

FIG. 13 is a flowchart illustrating a flow of processing executed by the paraffin-embedded block preparation device 1. The following processing is mainly executed by the control unit 110.

The control unit 110 causes the cassette holder gripping unit 11 to grip the cassette holder 2 provided to the holding portion 30 (step S10). The control unit 110 detects which of the holding portions 30a to 30d is holding the cassette holder 2, using the sensor 32. Then, the control unit 110 makes the conveying unit 20 move the cassette holder gripping unit 11 to be above the holding portion 30a, 30b, 30c, 30d in which the cassette holder 2 is detected. The control unit 110 moves the cassette holder gripping unit 11 downward with the claws 11a and 11b opened, and closes the claws 11a and 11b to make the cassette holder gripping unit 11 grip the cassette holder 2.

For example, when cassette holders 2 are held by all of the holding portions 30a to 30d, the cassette holder gripping unit 11 grips the cassette holder 2 held in the holding portions 30a, 30b, 30c, and 30d. For example, when the cassette holders 2 are held in the holding portions 30b to 30d, the cassette holder gripping unit 11 grips the cassette holder 2 held in the holding portion 30b.

The control unit 110 positions the cassette holder gripping unit 11 above the holding portion 30b, 30c, 30d, based on a result of the detection by the sensor 33, with the claws 11a and 11b arranged in the open position. Then, the control unit 110 moves the claws 11a and 11b from the open position to the closed position to grip the cassette holder 2 with the claws 11a and 11b.

Next, the control unit 110 immerses the cassette holder 2 in the chemical liquid (step S20). The control unit 110 moves the cassette holder gripping unit 11 to be above the chemical liquid bottle holding portion 40a, 40b, 40c, 40d corresponding to the holding portion 30a, 30b, 30c, 30d by which the cassette holder 2 gripped by the cassette holder gripping unit 11 has been held. For example, when the cassette holder gripping unit 11 is gripping the cassette holder 2 held in the holding portion 30a, the control unit 110 moves the cassette holder gripping unit 11 to be above the chemical liquid bottle holding portion 40a. For example, when the cassette holder gripping unit 11 is gripping the cassette holder 2 held in the holding portion 30b, the control unit 110 moves the cassette holder gripping unit 11 to be above the chemical liquid bottle holding portion 40b.

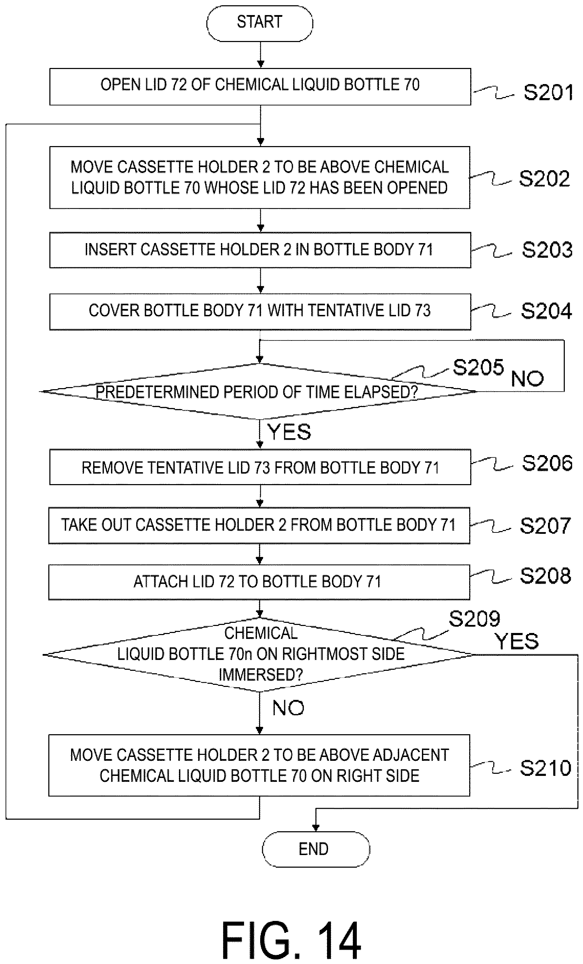

FIG. 14 is a flowchart illustrating a flow of processing (step S20) of immersing the cassette holder 2 in the chemical liquid. Hereinafter, the flow of step S20 will be described with reference to an example in which the cassette holder gripping unit 11 grips the cassette holder 2 held in the holding portion 30a.

The control unit 110 opens the lid 72 of the chemical liquid bottle 70 (step S201). When step S201 is performed for the first time, the control unit 110 opens the lid of the chemical liquid bottle 70h positioned at the leftmost side (-x side) among the chemical liquid bottles 70 arranged in the chemical liquid bottle holding portion 40a.

The processing of step S201 will be described. First, the control unit 110 rotates the head 10 about the axis 10ax to change the orientation of the head 10 from a state in which the longitudinal direction of the cassette holder gripping unit 11 is along the z direction and the longitudinal direction of the lid gripping unit 12 is along the x direction to a state in which the longitudinal direction of the cassette holder gripping unit 11 is along the x direction and the longitudinal direction of the lid gripping unit 12 is along the z direction. Next, the control unit 110 moves the claws 12a and 12b to the open state and moves the lid gripping unit 12 vertically downward (-z direction).

Next, the control unit 110 moves the claws 12a and 12b to the closed state to grip the lid 72 with the lid gripping unit 12, rotates the lid gripping unit 12 gripping the lid 72 to rotate the lid 72 relative to the bottle body 71 to remove the lid 72 from the bottle body 71, and moves the lid gripping unit 12 vertically upward (in the +z direction). Since the bottle body 71 and the hole 41a are both hexagonal when viewed in the z direction, the bottle body 71 does not rotate even when the lid 72 is rotated by the lid gripping unit 12, and the lid 72 can be removed from the bottle body 71 without gripping the bottle body 71.

Next, the control unit 110 moves the head 10 to the cassette holder 2 positioned above the chemical liquid bottle 70 whose lid 72 has been opened in step S201 (step S202). Then, the control unit 110 inserts the cassette holder 2 into the chemical liquid bottle 70 whose lid 72 has been opened in step S201, to immerse the cassette holder 2 in the chemical liquid (step S203).

The processing of step S203 will be described. First, the control unit 110 rotates the head 10 about the axis 10ax to change the orientation of the head 10 from a state in which the longitudinal direction of the cassette holder gripping unit 11 is along the x direction and the longitudinal direction of the lid gripping unit 12 is along the z direction to a state in which the longitudinal direction of the cassette holder gripping unit 11 is along the z direction and the longitudinal direction of the lid gripping unit 12 is along the x direction. Next, the control unit 110 moves the cassette holder gripping unit 11 in the -z direction to insert the cassette holder 2 into the bottle body 71. When the cassette holder 2 is inserted in the bottle body 71, the control unit 110 moves the claws 11a and 11b to the open state to release the gripping of the cassette holder 2.

As illustrated in FIG. 7, since the projections 95a and 95b of the cassette holder 2 are caught on the opening portion 71e, the cassette holder 2 does not fall into the bottle body 71. In addition, since the distal ends (flat surface portions 97a and 97b) of the projections 96a and 96b of the cassette holder 2 are in contact with the inner circumference surface of the tubular portion 71c and the flat surface portions 97a and 97b press the inner circumference surface of the tubular portion 71c, the cassette holder 2 inserted in the bottle body 71 does not rotate.

The description will now return to FIG. 14. The control unit 110 moves the head 10 in the +z direction, after bringing the claws 11a and 11b into the open state to release the gripping of the cassette holder 2. Then, the processing in step S203 ends.

Next, the control unit 110 puts the tentative lid 73 on the chemical liquid bottle 70 into which the cassette holder 2 has been inserted in step S203 (step S204).

The processing of step S204 will be described. First, the control unit 110 rotates the head 10 about the axis 10ax to change the orientation of the head 10 from a state in which the longitudinal direction of the cassette holder gripping unit 11 is along the z direction and the longitudinal direction of the lid gripping unit 12 is along the x direction to a state in which the longitudinal direction of the cassette holder gripping unit 11 is along the x direction and the longitudinal direction of the lid gripping unit 12 is along the z direction. Then, the control unit 110 moves the head 10 in the horizontal direction (at least one of the x direction and the y direction) and the +z direction to move the head 10 to be above the temporary placement portion 45. Then, the control unit 110 places the lid 72 gripped by the lid gripping unit 12 on the lid placement portion 45a.

Next, the control unit 110 causes the lid gripping unit 12 to grip the tentative lid 73 placed on the tentative lid placement portion 45b. Specifically, the control unit 110 moves the head 10 to be above the lid placement portion 45a, moves the head 10 in the -z direction, and then moves the claws 12a and 12b to the open state to place the lid 72 on the lid placement portion 45a. The control unit 110 moves the head 10 in the +z direction, then moves the head 10 in the horizontal direction to position the lid gripping unit 12 above the tentative lid placement portion 45b, and moves the claws 12a and 12b to the closed state after moving the head 10 in the -z direction, to grip the tentative lid 73.

Next, the control unit 110 places the gripped tentative lid 73 on the bottle body 71 so as to cover the opening portion of the bottle body 71 whose lid 72 has been removed. Specifically, the control unit 110 moves the head 10 in the horizontal direction to position the tentative lid 73 above the bottle body 71 whose lid 72 has been removed, moves the head 10 in the -z direction, and then moves the claws 12a and 12b to the open state to place the tentative lid 73 on the bottle body 71. Therefore, it is possible to prevent evaporation of and emission of odor from the chemical liquid. Then, the processing in step S204 ends.

The control unit 110 determines whether a predetermined period of time has elapsed after the processing in step S203 has started (step S205). The predetermined period of time is, for example, any period of time (24 hours in the present embodiment) between 6 and 48 hours when the chemical liquid bottle 70 into which the cassette holder 2 is inserted in step S203 is the chemical liquid bottle 70h, and is one hour in a case of each of the chemical liquid bottles 70i, 70j, 70k, 70l, 70m, and 70n.

The control unit 110 makes the cassette holder 2 move up and down inside the chemical liquid bottle 70 at a constant time interval until the predetermined period of time elapses after the start of the processing in step S203 (during the processing in step S205) to stir the chemical liquid filled in the chemical liquid bottle 70. For example, the control unit 110 makes the cassette holder gripping unit 11 grip the cassette holder 2 and makes the head 10 sequentially move by a short distance (for example, about 10 mm to 30 mm) in the +z direction and the -z direction. The constant time is, for example, 15 minutes. Thus, a new chemical liquid can be supplied to the vicinity of the sample S.

When the predetermined period of time has not elapsed after the start of the processing in step S203 (NO in step S205), the control unit 110 repeats step S205.

When the predetermined period of time has elapsed from the start of the processing in step S203 (YES in step S205), the control unit 110 removes the tentative lid 73 from the bottle body 71 (step S206), and takes out the cassette holder 2 from the bottle body 71 whose tentative lid 73 has been removed (step S207).

The processing of step S206 will be described. First, the control unit 110 moves the head 10 in the horizontal direction and the vertical direction to dispose the head 10 above the chemical liquid bottle 70 into which the cassette holder 2 has been inserted. At this time, the head 10 is in a state in which the longitudinal direction of the lid gripping unit 12 is along the z direction. Next, the control unit 110 moves the claws 12a and 12b to the open state and moves the head 10 in the -z direction, and then moves the claws 12a and 12b to the closed state to make the lid gripping unit 12 grip the tentative lid 73. Then, the control unit 110 moves the head 10 in the +z direction to remove the tentative lid 73 from the bottle body 71, and rotates the head 10 about the axis 10ax to achieve a state where the longitudinal direction of the cassette holder gripping unit 11 is along the z direction. Then, the processing in step S206 ends.

The processing of step S207 will be described. The control unit 110 moves the claws 11a and 11b to the open state, moves the head 10 in the -z direction, and then moves the claws 11a and 11b to the closed state to make the cassette holder gripping unit 11 grip the cassette holder 2. Then, the control unit 110 moves the head 10 in the +z direction to pull out the cassette holder 2 from the bottle body 71. Then, the processing in step S207 ends.

Next, the control unit 110 attaches the lid 72 to the chemical liquid bottle 70 from which the cassette holder 2 has been taken out (step S208).

The processing of step S208 will be described. First, the control unit 110 rotates the head 10 about the axis 10ax to change the orientation of the head 10 from a state in which the longitudinal direction of the cassette holder gripping unit 11 is along the z direction and the longitudinal direction of the lid gripping unit 12 is along the x direction to a state in which the longitudinal direction of the cassette holder gripping unit 11 is along the x direction and the longitudinal direction of the lid gripping unit 12 is along the z direction. With the lid gripping unit 12 gripping the tentative lid 73, the control unit 110 moves the head 10 in the horizontal direction to move the lid gripping unit 12 to be above the tentative lid placement portion 45b, moves the head 10 in the -z direction, and then moves the claws 12a and 12b to the open state to place the tentative lid 73 on the tentative lid placement portion 45b.

Next, the control unit 110 moves the head 10 in the +z direction and then moves the head 10 in the horizontal direction so that the lid gripping unit 12 moves the head 10 to be above the lid placement portion 45a. Next, the control unit 110 moves the claws 12a and 12b to the open state and moves the head 10 in the -z direction, and then moves the claws 12a and 12b to the closed state to make the lid gripping unit 12 grip the lid 72. After moving the head 10 in the +z direction, the control unit 110 moves the head 10 to be above the chemical liquid bottle 70 from which the cassette holder 2 has been taken out in step S25, and rotates the lid gripping unit 12 while moving the head 10 in the -z direction to attach the lid 72 to the bottle body 71. Then, the control unit 110 moves the head 10 in the +z direction, after moving the claws 12a and 12b to the open state to release the gripping of the lid 72. Then, the processing in step S208 ends.

Next, the control unit 110 determines whether the processing up to step S208 has been completed for the chemical liquid bottle 70n disposed on the rightmost side (+x side) among the chemical liquid bottles 70 disposed in the chemical liquid bottle holding portion 40a (step S209). When the processing up to step S208 has not been completed for the chemical liquid bottle 70n disposed on the rightmost side (NO in step S209), the control unit 110 opens the lid of the adjacent chemical liquid bottle 70 on the right side of the chemical liquid bottle 70 to which the lid 72 has been attached in step S208 (step S210). The processing of opening the lid of the chemical liquid bottle 70 is the same as that in step S201. Thereafter, the control unit 110 returns the processing to Step S202.

For example, when the processing in steps S202 to S208 has been executed on the chemical liquid bottle 70h, the control unit 110 opens the lid 72 of the chemical liquid bottle 70i (step S210), moves the cassette holder 2 to be above the chemical liquid bottle 70i (step S202), and inserts the cassette holder 2 into the chemical liquid bottle 70i (step S203).

For example, when the processing in steps S202 to S208 has been executed on the chemical liquid bottle 70k the control unit 110 opens the lid 72 of the chemical liquid bottle 70l (step S22), moves the cassette holder 2 to be above the chemical liquid bottle 70l (step S202), and inserts the cassette holder 2 into the chemical liquid bottle 70l (step S203).

When the processing up to step S208 is completed for the chemical liquid bottle 70n disposed on the rightmost side (YES in step S209), the control unit 110 ends the series of processing in step S20.

The description will now return to FIG. 13. Next, the control unit 110 immerses the cassette holder 2 in the paraffin liquid (step S30). The control unit 110 moves the cassette holder gripping unit 11 to be above the paraffin-filled bottle holding portion 50a, 50b, 50c, 50d corresponding to the holding portion 30a, 30b, 30c, 30d in which the cassette holder 2 gripped by the cassette holder gripping unit 11 has been held. For example, when the cassette holder gripping unit 11 is gripping the cassette holder 2 held in the holding portion 30a, the control unit 110 moves the cassette holder gripping unit 11 to be above the paraffin-filled bottle holding portion 50a. For example, when the cassette holder gripping unit 11 is gripping the cassette holder 2 held in the holding portion 30b, the control unit 110 moves the cassette holder gripping unit 11 to be above the paraffin-filled bottle holding portion 50b.

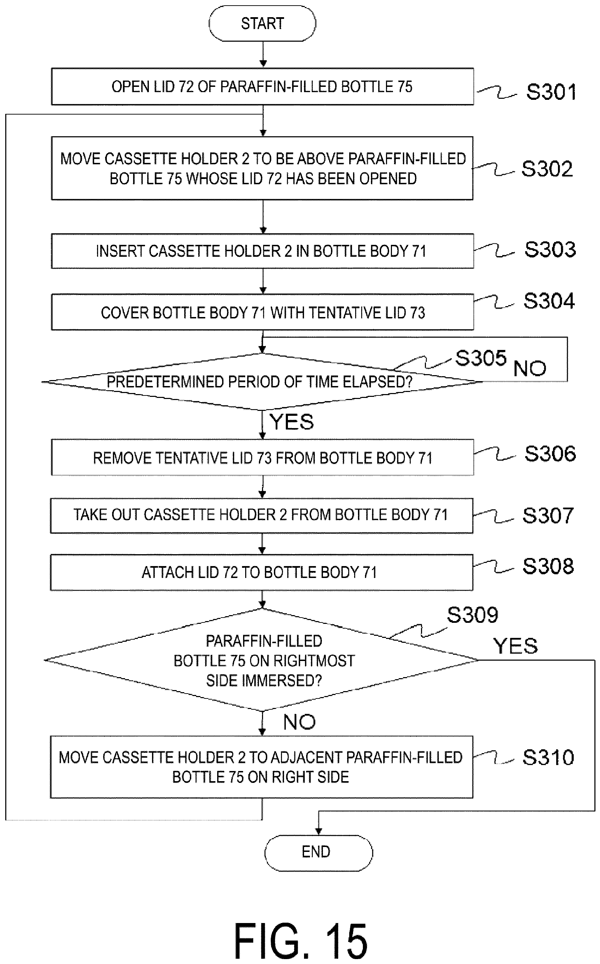

FIG. 15 is a flowchart illustrating a flow of processing (step S30) of immersing the cassette holder 2 in the paraffin liquid. Hereinafter, the flow of step S30 will be described with reference to an example in which the cassette holder gripping unit 11 grips the cassette holder 2 held in the holding portion 30a.

The control unit 110 opens the lid 72 of the paraffin-filled bottle 75 (step S301). When step S301 is performed for the first time, the control unit 110 opens the lid of the paraffin-filled bottle 75h positioned at the leftmost side (-x side) among the paraffin-filled bottles 75 arranged in the paraffin-filled bottle holding portion 50a. Since the processing in step S301 is the same as the processing in step S201, description thereof will be omitted.

Next, the control unit 110 moves the head 10 to position the cassette holder 2 above the paraffin-filled bottle 75 whose lid 72 has been opened in step S301 (step S302). Since the processing in step S302 is the same as the processing in step S202, description thereof will be omitted.

Then, the control unit 110 inserts the cassette holder 2 into the paraffin-filled bottle 75 whose lid 72 has been opened in step S301, to immerse the cassette holder 2 in the paraffin liquid (step S303). Since the processing in step S303 is the same as the processing in step S203, description thereof will be omitted.

Next, the control unit 110 puts the tentative lid 73 on the paraffin-filled bottle 75 into which the cassette holder 2 has been inserted in step S303 (step S304). Since the processing in step S304 is the same as the processing in step S204, description thereof will be omitted.

The control unit 110 determines whether a predetermined period of time has elapsed after the processing in step S33 has started (step S305). The predetermined period of time is 1 hour and 20 minutes for example.

As in step S205, the control unit 110 may make the cassette holder gripping unit 11 grip the cassette holder 2 until the predetermined period of time elapses after the processing in step S303 has started (during the processing in step S305), and move the cassette holder 2 up and down at a constant time interval to stir the paraffin liquid filled in the paraffin-filled bottle 75.

When the predetermined period of time has not elapsed after the start of the processing in step S303 (NO in step S305), the control unit 110 repeats step S305.

When the predetermined period of time has elapsed from the start of the processing in step S303 (YES in step S305), the control unit 110 removes the tentative lid 73 from the paraffin-filled bottle 75 (step S306), and takes out the cassette holder 2 from the paraffin-filled bottle 75 whose tentative lid 73 has been removed (step S307). Since the processing in steps S306 and S307 is the same as the processing in respective steps S206 and S207, description thereof will be omitted.

Next, the control unit 110 attaches the lid 72 to the paraffin-filled bottle 75 from which the cassette holder 2 has been taken out (step S308). Since the processing in step S308 is the same as the processing in step S208, description thereof will be omitted.

Next, the control unit 110 determines whether the processing up to step S308 has been completed for the paraffin-filled bottle 75j disposed on the rightmost side (+x side) among the paraffin-filled bottles 75 disposed in the paraffin-filled bottle holding portion 50a (step S309). When the processing up to step S308 has not been completed for the paraffin-filled bottle 75j disposed on the rightmost side (NO in step S309), the control unit 110 opens the lid of the adjacent paraffin-filled bottle 75 on the right side of the paraffin-filled bottle 75 to which the lid 72 has been attached in step S308 (step S310). The processing of opening the lid of the paraffin-filled bottle 75 is the same as that in step S301. Thereafter, the control unit 110 returns the processing to Step S302.

When the processing up to step S308 is completed for the paraffin-filled bottle 75j disposed on the rightmost side (YES in step S309), the control unit 110 ends the series of processing in step S30.

The description will now return to FIG. 13. Next, the control unit 110 places the cassette holder 2 on the placement portion 61 (step S40). In this process, the control unit 110 places the cassette holder 2 gripped by the cassette holder gripping unit 11 on the paraffin receiver 102 placed in the hole 61a, 61b, 61c, 61d corresponding to the holding portions 30a, 30b, 30c, 30d in which the cassette holder 2 has been held. For example, when the cassette holder gripping unit 11 grips the cassette holder 2 held in the holding portion 30a, the control unit 110 places the cassette holder 2 on the paraffin receiver 102 placed in the hole 61a. For example, when the cassette holder gripping unit 11 grips the cassette holder 2 held in the holding portion 30b, the control unit 110 places the cassette holder 2 on the paraffin receiver 102 placed in the hole 61b.

The processing in step S40 will be described using as an example, a case where the cassette holder gripping unit 11 grips the cassette holder 2 held in the holding portion 30a. In step S36, since the longitudinal direction of the cassette holder gripping unit 11, that is, the cassette holder 2 is along the horizontal direction, the control unit 110 makes the conveying unit 20 move the cassette holder gripping unit 11 in the horizontal direction in a state where the cassette holder gripping unit 11 is along the horizontal direction, to dispose the cassette holder 2 above the hole 61a. Next, the control unit 110 makes the conveying unit 20 move the cassette holder gripping unit 11 in the -z direction, to place the cassette holder 2 on the paraffin receiver 102.

When the cassette holder 2 is placed on the paraffin receiver 102, the control unit 110 moves the claws 11a and 11b to the open position to separate the cassette holder 2 from the cassette holder gripping unit 11. Then, the control unit 110 makes the conveying unit 20 move the cassette holder gripping unit 11 in the horizontal direction and the vertical direction, to move the cassette holder gripping unit 11 away from the paraffin fixing unit 60. Then, the processing in step S40 ends.

Next, the control unit 110 fills the cassette holder 2 placed on the placement portion 61 with paraffin (step S50). Now, the processing in step S50 will be described using as an example a case where the cassette holder 2 is placed in the hole 61a. The control unit 110 makes the conveying unit 66 move the placement portion 61 in the -y direction, to dispose the hole 61a below the nozzle 62d. As a result, the cassette holder 2 provided in the hole 61a is disposed below the nozzle 62d. Then, in a state where the cassette holder 2 is disposed below the nozzle 62d, the control unit 110 discharges paraffin from the nozzle 62d.

As illustrated in FIG. 10(B) and 10(C), since the cassette holder 2 is placed on the paraffin receiver 102, the paraffin discharged from the nozzle 62d fills the inside of the protrusion 93.

As illustrated in FIG. 11, in a state where the cassette holder 2 is disposed below the nozzle 62d, the cassette holder 2 and the paraffin receiver 102 are placed on the vibration table 68. The control unit 110 makes the vibration table 68, that is, the cassette holder 2 and the paraffin receiver 102 vibrate, while discharging paraffin from the nozzle 62d. Thus, the paraffin can fill the entirety of the inside of the protrusion 93.

At the same time, the control unit 110 heats the vibration table 68, that is, the cassette holder 2 and the paraffin receiver 102. As a result, it is possible to prevent air from remaining inside the protrusion 93 due to the paraffin solidifying before filling the entirety of the inside of the protrusion 93.

The description will now return to FIG. 13. Next, the control unit 110 cools the paraffin filled in the cassette holder 2 (step S60). The control unit 110 makes the conveying unit 67 move the placement portion 61 in the -y direction, to make the placement portion 61 below the nozzle 62d move to be on the upper side of the cooling unit 63. As result, the paraffin receivers 102 placed in the holes 61a to 61d is placed on the flat surface portion 63a, and the paraffin inside the cassette holder 2 is cooled by the cooling unit 63. Thus, a series of processing executed by the paraffin-embedded block preparation device 1 is completed.

While FIG. 13 illustrates the processing flow in the case where the paraffin-embedded block preparation device 1 processes one cassette holder 2, the paraffin-embedded block preparation device 1 can simultaneously process a plurality of cassette holders 2. Hereinafter, a case where processing is performed on two cassette holders 2 held in the holding portions 30a and 30b will be described as an example.

The control unit 110 executes the processing in step S10 and steps S201 to S204 on the cassette holder 2 held in the holding portion 30a, and executes the processing in step S10 and steps S201 to S205 on the cassette holder 2 held in the holding portion 30b, while the processing in step S205 is being executed on the cassette holder 2 held in the holding portion 30a (until the predetermined period of time elapses). After the processing in steps S206 to S210 has been executed on the cassette holder 2 held in the holding portion 30a, the processing in steps S206 to S210 is executed on the cassette holder 2 held in the holding portion 30b. Thus, the processing in steps S10 and S20 can be simultaneously executed on two cassette holders 2.

The paraffin-embedded block preparation device 1 also executes the processing in step S30 simultaneously on the cassette holders 2 held in the holding portions 30a and 30b. The control unit 110 executes the processing in steps S301 to S304 on the cassette holder 2 held in the holding portion 30a, and executes the processing in steps S301 to S305 on the cassette holder 2 held in the holding portion 30b, while the processing in step S305 is being executed on the cassette holder 2 held in the holding portion 30a. After the processing in steps S306 to S310 has been executed on the cassette holder 2 held in the holding portion 30a, the processing in steps S306 to S310 is executed on the cassette holder 2 held in the holding portion 30b. Thus, the processing in step S30 can be simultaneously executed on two cassette holders 2.

Then, the control unit 110 sequentially executes the processing steps S40 and S50 on the cassette holders 2 held in the holding portions 30a and 30b. Specifically, when it is determined YES in step S309 in the processing in steps S302 to S309 on the paraffin-filled bottle 75j corresponding to the cassette holder 2 held in the holding portion 30a, the control unit 110 executes the processing in step S40 and S50 after step S309. Then, when it is determined YES in step S309 in the processing in steps S302 to S309 on the paraffin-filled bottle 75j corresponding to the cassette holder 2 held in the holding portion 30b, the control unit 110 executes the processing in step S40 and S50 after step S309.

The control unit 110 executes step S60 for a plurality of cassette holders 2 simultaneously. Specifically, the control unit 110 moves the placement portion 61 in the -y direction, to make the placement portion 61 below the nozzle 62d move to be on the upper side of the cooling unit 63. As a result, all the cassette holders 2 and the paraffin receivers 102 placed on the placement portion 61 are placed on the flat surface portion 63a, and the paraffin in all the cassette holders 2 placed on the placement portion 61 is simultaneously cooled by the cooling unit 63.

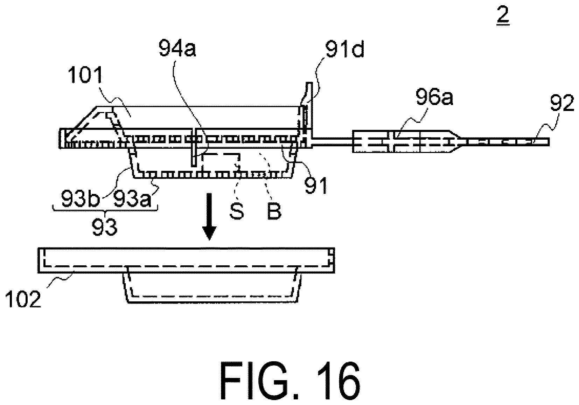

FIG. 16 is a view illustrating the cassette holder 2 after processing executed by the paraffin-embedded block preparation device 1. With the paraffin receiver 102, the paraffin discharged in step S50 fills the protrusion 93, and the paraffin filled into the protrusion 93 in step S50 is solidified. Therefore, even when the paraffin receiver 102 is removed from the cassette holder 2, the solidified paraffin does not flow out from the protrusion 93. Thus, an embedded block B in which the sample S is embedded in the paraffin is formed inside the protrusion 93.

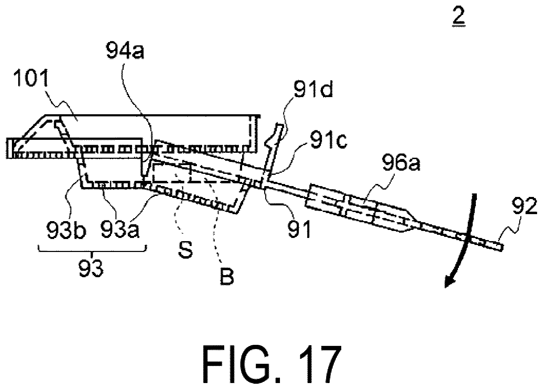

FIG. 17 is a diagram illustrating how an embedded block is taken out from the cassette holder 2. Since the cassette receiving portion 91 and the protrusion 93 are provided with the pair of slits 94a and 94b, the cassette holder 2 can be folded along the slits 94a and 94b. Since the slits 94a and 94b are collinearly arranged, a force is likely to be concentrated between the slits 94a and 94b. Since the slits 94a and 94b are substantially parallel to the short side (side 91c) of the rib 91b and the plate-shaped portion 92 extends so as to protrude from the side 91c, when the operator grips the plate-shaped portion 92 and deforms the cassette holder 2 in a direction in which the opening portions of the slits 94a and 94b are widened (see the arrow in FIG. 17), the slits 94a and 94b and the point of effort (the position at which the operator grips the cassette holder 2) can be located far from each other, whereby the cassette holder 2 can be easily folded.

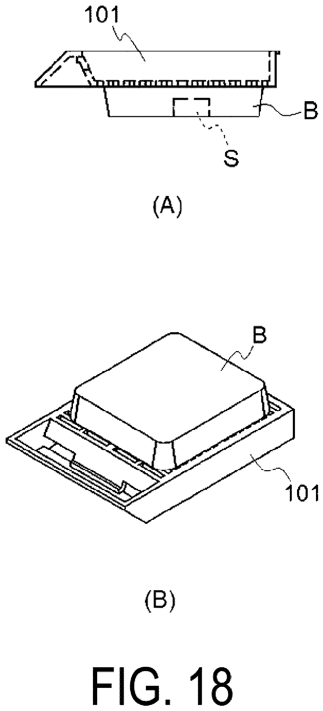

FIG. 18 is a view illustrating the cassette 101 and the embedded block B taken out from the cassette holder 2, with (A) being a side view and (B) being a perspective view. When the cassette holder 2 is folded, the cassette 101 and the embedded block B are taken out from the cassette holder 2. The cassette 101 and the embedded block B are integrated by solidifying molten paraffin.

According to the present embodiment, a plurality of cassette holders 2, that is, a plurality of specimens, can be processed simultaneously by inserting the cassette holder 2 held in the holding portion 30a into the chemical liquid bottle 70 provided to the chemical liquid bottle holding portion 40a and the paraffin-filled bottle 75 provided to the paraffin-filled bottle holding portion 50a, inserting the cassette holder 2 held in the holding portion 30b into the chemical liquid bottle 70 provided to the chemical liquid bottle holding portion 40b and the paraffin-filled bottle 75 provided to the paraffin-filled bottle holding portion 50b, inserting the cassette holder 2 held in the holding portion 30c into the chemical liquid bottle 70 provided to the chemical liquid bottle holding portion 40c and the paraffin-filled bottle 75 provided to the paraffin-filled bottle holding portion 50c, and inserting the cassette holder 2 held in the holding portion 30d into the chemical liquid bottle 70 provided to the chemical liquid bottle holding portion 40d and the paraffin-filled bottle 75 provided to the paraffin-filled bottle holding portion 50d.

Furthermore, according to the present embodiment, since different chemical liquid bottles 70 and paraffin-filled bottles 75 are used for respective cassette holders 2, contamination can be prevented. For example, when an embedded block for pathological diagnosis is prepared, different cassette holders 2 may be inserted into the same chemical liquid bottle 70 or paraffin-filled bottle 75. However, when an embedded block for genetic diagnosis is prepared, inserting different cassette holders 2 into the same chemical liquid bottle 70 or paraffin-filled bottle 75 can cause contamination, resulting in failure in accurate diagnosis. By contrast, using different chemical liquid bottles 70 and paraffin-filled bottles 75 for respective cassette holders 2 as in the present embodiment can make an embedded block suitable for genetic diagnosis can be prepared.

Furthermore, according to the present embodiment, since the chemical liquid bottles 70 and the paraffin-filled bottles 75 are provided in the device, immersion of the sample in the fixative (formalin) and in paraffin can be performed automatically. Furthermore, since the time during which the cassette holders 2 are immersed in the chemical liquid or liquid paraffin can be managed, a high-quality embedded block can be prepared. In particular, since formalin fragments DNA, it is necessary to strictly manage the immersion time in the fixative to 6 to 48 hours. However, it is difficult to manage the immersion time in the fixative in view of the working hours of doctors and technicians. By contrast, providing the respective chemical liquid bottles 70 filled with formalin, ethanol, and xylene in the paraffin-embedded block preparation device 1 and managing the immersion time enables preparation of a high-quality embedded block. A large amount of DNA can be extracted from a high-quality embedded block, which contributes to improvement in test accuracy.

Furthermore, according to the present embodiment, since the paraffin fixing unit 60 is provided, not only the immersion of the sample in the fixative and in paraffin but also preparation of the embedded block can be performed automatically. In particular, by horizontally moving the placement portion 61 on which the cassette holder 2 is placed horizontally, the discharge of paraffin and the cooling of the cassette holder 2 can be performed automatically.

According to the present embodiment, since the plate-shaped portion 92 extends substantially parallel to the bottom surface 91a, the cassette holder gripping unit 11 can grip the plate-shaped portion 92 and immerse the cassette 101, provided in the cassette receiving portion 91, in the chemical liquid. The embedded block B can be easily taken out from the inside of the cassette holder 2 by easily folding the cassette holder 2 along the slits 94a and 94b, whereby the embedded block B can be prepared with high workability.

In the present embodiment, the holding portion 30 includes the four holding portions 30a to 30d, the chemical liquid bottle holding portion 40 includes the four chemical liquid bottle holding portions 40a to 40d, and the paraffin-filled bottle holding portion 50 includes the four paraffin-filled bottle holding portions 50a to 50d. However, the holding portion 30 may include at least two holding portions 30a and 30b, the chemical liquid bottle holding portion 40 may include at least two chemical liquid bottle holding portions 40a and 40b, and the paraffin-filled bottle holding portion 50 may include at least two paraffin-filled bottle holding portions 50a and 50b. While the chemical liquid bottle holding portions 40a to 40d are provided adjacent to each other and the paraffin-filled bottle holding portions 50a to 50d are provided adjacent to each other, the chemical liquid bottle holding portions 40a to 40d and the paraffin-filled bottle holding portions 50a to 50d may not be adjacent to each other.

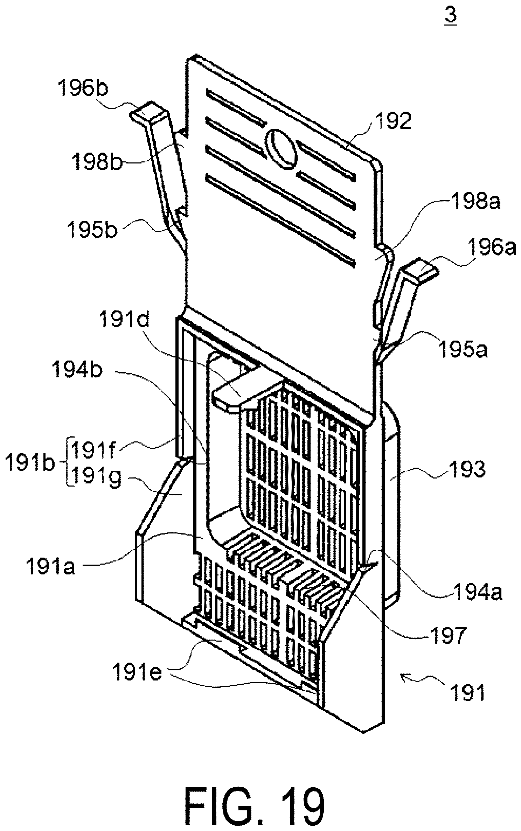

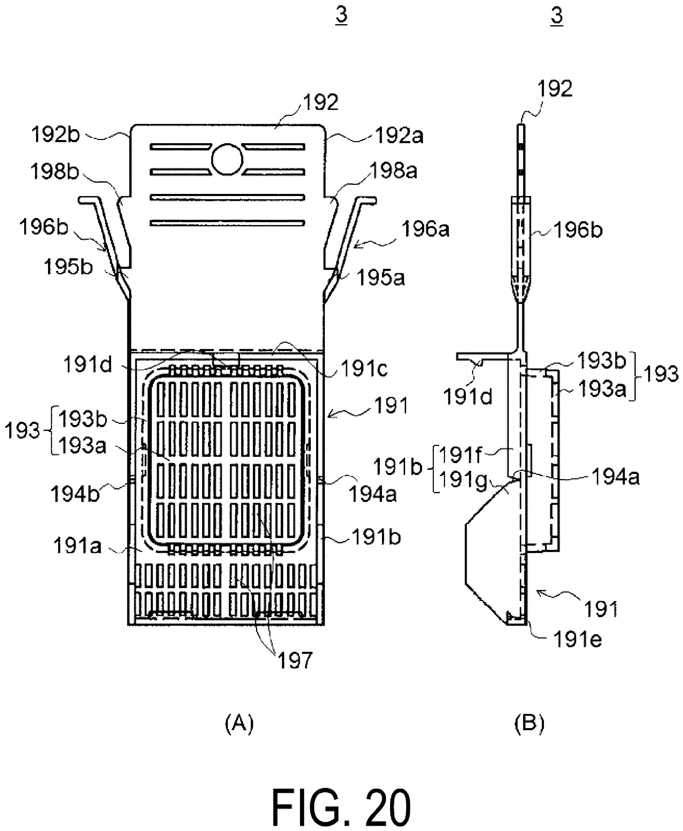

In the present embodiment, the sample S and the cassette 101 are attached to the cassette holder 2, but the form of the cassette holder is not limited to this. FIG. 19 is a perspective view illustrating an overview of the cassette holder 3 according to a modification. FIG. 20 is a diagram illustrating an example of a schematic configuration of the cassette holder 3, with (A) being a plan view and (B) being a cross-sectional view. Note that hatching indicating a cross section is omitted.

The cassette holder 3 mainly includes a cassette receiving portion 191 to which a cassette 101 (see FIG. 5) is set, a plate-shaped portion 192 having a substantially plate-like shape, and a protrusion 193 provided on the cassette receiving portion 191.

In the description of the cassette holder 3, a direction substantially orthogonal to the extending direction of the plate-shaped portion 192 is referred to as an upward-downward direction, a protruding direction of the protrusion 193 is referred to as a downward direction, and a direction opposite to the protruding direction of the protrusion 193 is referred to as an upward direction. The plan view in FIG. 19(A) illustrates the cassette holder 3 as viewed from above.

The cassette receiving portion 191 has a rectangular shape in plan view, and mainly includes a bottom surface 191a and a rib 191b. The bottom surface 191a is a flat surface with which the lower surface of the cassette 101 comes into contact when the cassette 101 is set, and has a rectangular shape in plan view. The bottom surface 191a is provided with a plurality of through holes 197.

The rib 191b protrudes upward from the bottom surface 191a. The rib 191b has a rectangular shape in plan view and comes into contact with the peripheral edge of the cassette 101 when the cassette 101 is set. The rib 191b includes a short rib 191f and a tall rib 191g. With the rib 191g, the cassette holder 3 can be easily folded at slits 194a and 194b (described in detail below).

The rib 191b is provided with a cassette pressing claw 191d for holding the cassette 101 when the cassette 101 is set in the cassette receiving portion 191. However, the cassette pressing claw 191d is not essential. A projection 191e is provided on the side of the rib 191b opposite to the cassette pressing claw 191d.

The bottom surface 191a is provided with the protrusion 193 protruding downward. The protrusion 193 is hollow inside, and includes a bottom surface 193a on which the sample S is placed and a side surface 193b. The protrusion 193 is provided with the plurality of through holes 197.

The cassette receiving portion 191 is provided with the pair of slits 194a and 194b. The slits 194a and 194b are substantially parallel to a short side (side 191c) of the rib 91b, and are collinearly arranged in plan view of the cassette holder 3.

The plate-shaped portion 192 is provided to the side 191c and extends substantially parallel to the bottom surface 191a. The plate-shaped portion 192 has a rectangular shape in plan view, and has two sides 192a and 192b along a direction (first direction) substantially parallel to the long side of the rib 191b. The sides 192a and 192b have substantially the same length as the long side of the rib 191b in plan view. As a result, the direction along the sides 192a and 192b is the longitudinal direction of the cassette holder 3.

The sides 192a and 192b are respectively provided with projections 195a and 195b and projections 198a and 198b. The projections 195a and 195b and the projections 198a and 198b are pairs of projections protruding outward in plan view.

The sides 192a and 192b are provided with projections 196a and 196b, respectively. The projections 196a and 196b are a pair of projections protruding outward in plan view. The distal end of each of the projections 196a and 196b is configured to be movable in a direction substantially parallel to the side 91c.

The projections 195a and 195b are members for reinforcing the base end portions of the projections 196a and 196b, and are formed integrally with the projections 196a and 196b at the base ends of the projections 196a and 196b. The projections 198a and 198b come into contact with the projections 196a and 196b when the distal ends of the projections 196a and 196b move in a direction substantially parallel to the side 91c, and thus prevent excessive deformation of the projections 196a and 196b.

The cassette holder 3 is inserted into the bottle body 71 through the opening portion 71e (see FIG. 7). During this process, the cassette holder 3 is vertically orientated with the plate-shaped portion 192 extending along the vertical direction. Since the width between both ends of the projections 196a and 196b is larger than a diameter D (see FIG. 7) of the tubular portion 71c, the projections 196a and 196b are caught on the opening portion 71e, whereby the cassette holder 3 is positioned in the z direction. With the projections 198a and 198b provided, the cassette holder 3 is prevent from falling into the bottle body 71 due to excessive deformation of the projections 196a and 196b.

In addition, since the distal ends of the projections 196a and 196b are configured to be movable in the width direction of the cassette holder 3, when the cassette holder 3 is inserted into the bottle body 71, edge portions of the projections 196a and 196b press the inner circumference surface of the opening portion 71e from the inside. As a result, the cassette holder 3 is fixed to the bottle body 71 with the cassette holder 3 inserted in the bottle body 71 prevented from rotating.

According to the modification, since the plate-shaped portion 192 extends substantially parallel to the bottom surface 191a, the cassette holder gripping unit 11 can grip the plate-shaped portion 192 and immerse the cassette 101, provided in the cassette receiving portion 191, in the chemical liquid. The embedded block B can be easily taken out from the inside of the cassette holder 3 by folding the cassette holder 3 along the slits 194a and 194b, whereby the embedded block B can be prepared with high workability.

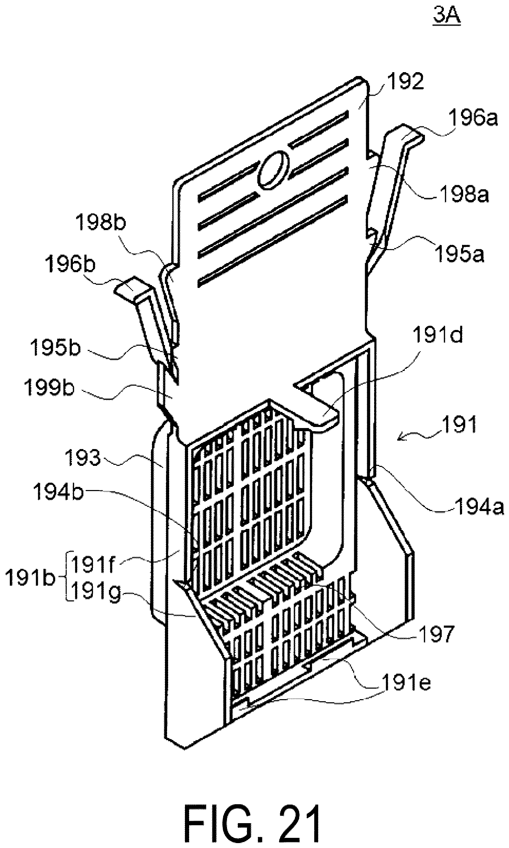

While in the cassette holder 3, the sides 192a and 192b are respectively provided with the projections 195a and 195b and the projections 196a and 196b, the side 192a or the side 192b may be further provided with a projection. In a cassette holder 3A illustrated in FIG. 21, the side 192b is provided with a projection 199b. The projection 199b is provided only on one side of the plate-shaped portion 192. The cassette holder 3A is positioned with respect to the bottle body 71 with the distal end of the projection 199b being in contact with the inner circumference surface of the tubular portion 71c (see FIG. 7).

The embodiments of the invention are described above in detail with reference to the drawings. However, specific configurations are not limited to the embodiments and also include changes in design or the like without departing from the gist of the invention.

Additionally, in the present invention, "substantially" is a concept not only including the case of being strictly the same, but also including an error and deformation to the extent that a loss of identity does not occur. For example, a term "substantially parallel" and a term "substantially orthogonal" are not limited to "strictly parallel" and "strictly orthogonal." In addition, for example, terms such as "parallel," "orthogonal," and the like include "substantially parallel," "substantially orthogonal," and the like, respectively. To put it differently, those terms are not strictly limited to the parallel state, orthogonal state, or the like, respectively.

### Reference Signs List

1: Paraffin-embedded block preparation device
2: Cassette holder
10: Head
10ax: Axis
11: Cassette holder gripping unit
11a, 11b: Claw
12: Lid gripping unit
12a, 12b: Claw
12ax: Axis
13: Body portion
20: Conveying unit
21, 22, 23, 24: Rail
25: Driving unit
30, 30a, 30b, 30c, 30d: Holding portion
31: Frame
31a, 31b: Plate-shaped portion
31c, 31d: Slit
32, 33: Sensor
40, 40a, 40b, 40c, 40d: Chemical liquid bottle holding portion
41: Plate-shaped portion
41a: Hole
42: Plate-shaped portion
45: Temporary placement portion
45a: Lid placement portion
45b: Tentative lid placement portion
50, 50a, 50b, 50c, 50d: Paraffin-filled bottle holding portion
51: Plate-shaped portion
51a: Hole
52: Plate-shaped portion
53: Heating portion
60: Paraffin fixing unit
61: Placement portion
61a, 61b, 61c, 61d: Hole
62: Paraffin discharge unit
62a: Housing
62b: Tank
62c: Pipe
62d: Nozzle
63: Cooling unit
63a: Flat surface portion
63b: Cooling mechanism
66, 67: Conveying unit
68: Vibration table
70, 70h, 70i, 70j, 70k, 70l, 70m, 70n: Chemical liquid bottle
70a, 70b, 70c, 70d: Chemical liquid bottle group
71: bottle body
71a: Bottom surface
71b: Side surface
71c: Tubular portion
71d: Thread
71e: Opening portion
72: Lid
73: Tentative lid
75, 75h, 75i, 75j: Paraffin-filled bottle
75a, 75b, 75c, 75d: Paraffin-filled bottle group
91, 191: Cassette receiving portion
91a, 191a: Bottom surface
91b, 191b, 191f, 191g: Rib
91c, 191c: Side
91d, 191d: Cassette pressing claw
91e, 191e: Projection
92, 192: Plate-shaped portion
92a, 92b, 192a, 192b: Side
92e, 92f: Recess
93, 193: Protrusion
93a, 193a: Bottom surface
93b, 193b: Side surface
94a, 94b, 194a, 194b: Slit
95a, 95b, 96a, 96b, 195a, 195b, 196a, 196b, 198a, 198b, 199b: Projection
97, 197: Through hole
97a, 97b: Flat surface portion
98a, 98b: Arm portion
101: Cassette
101a: Front end
101b: Rear end
102: Paraffin receiver
102a: Plate-shaped portion
102b: Protrusion
102c: Rib
110: Control unit
112: Communication unit
114: Storage unit

## Claims

1. A paraffin-embedded block preparation device comprising:
a holding portion configured to hold a cassette holder including a cassette and a specimen vertically;
a chemical liquid bottle holding portion provided with a plurality of chemical liquid bottles filled with a chemical liquid;
a paraffin-filled bottle holding portion provided with a paraffin-filled bottle filled with liquid paraffin;
a head including a cassette holder gripping unit configured to grip the cassette holder;
a first conveying unit configured to move the head in a horizontal direction or a vertical direction; and
a control unit configured to control the head and the first conveying unit, wherein
the holding portion includes a first holding portion and a second holding portion,
the first holding portion and the second holding portion respectively hold a first cassette holder and a second cassette holder, each of which is the cassette holder,
the chemical liquid bottle holding portion includes a first chemical liquid bottle holding portion and a second chemical liquid bottle holding portion,
the paraffin-filled bottle holding portion includes a first paraffin-filled bottle holding portion and a second paraffin-filled bottle holding portion, and
the control unit causes the cassette holder gripping unit to grip the first cassette holder and inserts the first cassette holder into the chemical liquid bottle provided to the first chemical liquid bottle holding portion and the paraffin-filled bottle provided to the first paraffin-filled bottle holding portion, and causes the cassette holder gripping unit to grip the second cassette holder and inserts the second cassette holder into the chemical liquid bottle provided to the second chemical liquid bottle holding portion and the paraffin-filled bottle provided to the second paraffin-filled bottle holding portion.

2. The paraffin-embedded block preparation device according to claim 1, wherein
the chemical liquid bottle includes a first chemical liquid bottle filled with formalin and a second chemical liquid bottle filled with ethanol,
the first chemical liquid bottle holding portion and the second chemical liquid bottle holding portion are respectively provided with the first chemical liquid bottle and the second chemical liquid bottle, and
the control unit inserts the first cassette holder into the first chemical liquid bottle provided to the first chemical liquid bottle holding portion, determines whether a predetermined period of time has elapsed after insertion of the first cassette holder into the first chemical liquid bottle, and when the predetermined period of time has elapsed, takes out the first cassette holder from the first chemical liquid bottle and inserts the first cassette holder into the second chemical liquid bottle provided to the first chemical liquid bottle holding portion, and inserts the second cassette holder into the first chemical liquid bottle provided to the second chemical liquid bottle holding portion, determines whether a predetermined period of time has elapsed after insertion of the second cassette holder into the first chemical liquid bottle, and when the predetermined period of time has elapsed, takes out the second cassette holder from the first chemical liquid bottle and inserts the second cassette holder into the second chemical liquid bottle provided to the second chemical liquid bottle holding portion.

3. The paraffin-embedded block preparation device according to claim 2, wherein
the chemical liquid bottle includes a third chemical liquid bottle filled with xylene,
the first chemical liquid bottle holding portion and the second chemical liquid bottle holding portion are each provided with the third chemical liquid bottle, and
the control unit inserts the first cassette holder into the second chemical liquid bottle provided to the first chemical liquid bottle holding portion, determines whether a predetermined period of time has elapsed after insertion of the first cassette holder into the second chemical liquid bottle, and when the predetermined period of time has elapsed, takes out the first cassette holder from the second chemical liquid bottle and inserts the first cassette holder into the third chemical liquid bottle provided to the first chemical liquid bottle holding portion, and inserts the second cassette holder into the second chemical liquid bottle provided to the second chemical liquid bottle holding portion, determines whether a predetermined period of time has elapsed after insertion of the second cassette holder into the second chemical liquid bottle, and when the predetermined period of time has elapsed, takes out the second cassette holder from the second chemical liquid bottle and inserts the second cassette holder into the third chemical liquid bottle provided to the second chemical liquid bottle holding portion.

4. The paraffin-embedded block preparation device according to claim 2 or 3, wherein the control unit inserts the first cassette holder into the first chemical liquid bottle provided to the first chemical liquid bottle holding portion, determines whether the predetermined period of time has elapsed after insertion of the first cassette holder into the first chemical liquid bottle, and inserts the second cassette holder into the first chemical liquid bottle provided to the second chemical liquid bottle holding portion until the predetermined period of time has elapsed.

5. The paraffin-embedded block preparation device according to any one of claims 1 to 4, comprising:
a placement portion on which the cassette holder is placed horizontally;
a paraffin discharge unit including a nozzle configured to discharge paraffin;
a cooling unit including a cooling mechanism and a flat surface portion on which the cassette holder is placed horizontally; and
a second conveying unit configured to move the placement portion in the horizontal direction, wherein
the head changes a position and orientation of the cassette holder gripping unit from a state in which the cassette holder gripping unit holds the cassette holder vertically to a state in which the cassette holder gripping unit holds the cassette holder horizontally, and
the control unit changes the position and orientation of the cassette holder gripping unit to horizontally place the cassette holder held vertically, controls the head and the first conveying unit to place the cassette holder on the placement portion, and controls the paraffin discharge unit and the second conveying unit to move the placement portion in the horizontal direction and dispose the placement portion below the nozzle to discharge paraffin from the nozzle in a state in which the cassette holder is disposed below the nozzle, and moves the placement portion from below the nozzle in the horizontal direction to place the cassette holder on the flat surface portion.

6. The paraffin-embedded block preparation device according to claim 5, comprising a vibration table that is capable of translational motion at least in the horizontal direction and is provided below the nozzle in the vertical direction, wherein
the control unit controls the second conveying unit, the paraffin discharge unit, and the vibration table to place the cassette holder placed on the placement portion on the vibration table and vibrate the vibration table while discharging paraffin from the nozzle.

7. The paraffin-embedded block preparation device according to any one of claims 1 to 6, wherein
the chemical liquid bottle includes a bottle body a cross-sectional shape of which along a plane orthogonal to a center axis is polygonal, and a lid covering an opening portion of the bottle body,
the head includes a lid gripping unit configured to grip the lid and rotatably provided,
the chemical liquid bottle holding portion includes a plate-shaped portion in which a plurality of holes having a shape corresponding to an outer shape of the chemical liquid bottle are formed,
the plate-shaped portion extends along the horizontal direction,
the bottle body is inserted into the holes,
the bottle body and the lid are screwed together, and
the control unit controls the lid gripping unit to rotate the lid gripping unit in a state in which the lid gripping unit grips the lid to remove the lid from the bottle body.

8. The paraffin-embedded block preparation device according to claim 7, comprising:
a lid placement portion on which the lid is placed; and
a tentative lid placement portion on which a tentative lid is placed, wherein
the control unit places the lid removed from the bottle body on the lid placement portion and covers the bottle body from which the lid is removed with the tentative lid placed on the tentative lid gripping unit.

9. The paraffin-embedded block preparation device according to any one of claims 1 to 8, wherein the control unit causes the cassette holder gripping unit to grip the cassette holder and moves the cassette holder up and down inside the chemical liquid bottle.
